# EUROPEAN PATENT APPLICATION

(11) **EP 1 739 570 A1**
(43) Date of publication of application: **03.01.2007**
(21) Application number: 05734069.7
(22) Date of filing: 21.04.2005
(51) Int. Cl.: G06F 15/00, G09C 1/00

(54) **USER AUTHENTICATION SYSTEM AND DATA PROVIDING SYSTEM USING THE SAME**

(30) Priority: 23.04.2004 JP 2004128085
(71) Applicant: NEC CORPORATION, Minato-ku, Tokyo 108-8001 (JP)
(72) Inventor: SONETAKA, Noriyoshi, NEC CORPORATION, Tokyo 108-8001 (JP)
(74) Representative: Glawe, Delfs, Moll
(86) International application number: PCT/JP2005/007584
(87) International publication number: WO 2005/103919

(57) **Abstract**

[PROBLEMS] Provided is a user-friendly authentication system with an improved security.

[MEANS FOR SOLVING PROBLEMS] The authentication system of the present invention comprises: an input device for receiving from a user an input of an address data of a portable terminal owned by the user; a corresponding data generating device for generating and storing a corresponding data which corresponds to the inputted address data; a corresponding data transmitting device for transmitting the corresponding data generated in the corresponding data generating device to the address data received by the input device; and also a collation device for collating to check, when the corresponding data is inputted by the user through the input device, whether or not the corresponding data is consistent with the corresponding data which has been generated and stored by the corresponding data generating device.

## Description

### TECHNICAL FIELD

The present invention relates to a user authentication system and, more specifically, to a system which performs user authentication when a user of a portable terminal logs in to a system placed on the streets or the like for requesting a data in order to obtain a prescribed data for the portable terminal. Also, the present invention relates to a data providing system using the same.

### BACKGROUND ART

In recent years, the use of a portable terminal has become widely diversified. For example, a portable telephone can be used for a variety of purposes, e. g., viewing a website by connecting to the Internet, downloading contents such as games and moving pictures to be used on the portable telephone, cashing or electro-ticketing through the portable telephone. For this, the provider of the service performs authentication of the identification data peculiar to the user of the portable telephone, which is stored in the portable terminal. Thereby, the unlawful use by others can be suppressed.

For example, when a user inputs an identification data to a portable terminal and transmits it to an authentication server through a network, it can be collated with a data which is registered in advance. Thereby, the authentication processing can be achieved.

However, when inputting the identification data into the portable terminal as described above, it is necessary to do so through a small display unit of a display screen and also by operating an operation unit of a portable telephone, in which the number and size of keys are limited. Therefore, the operations are difficult for the user.

Examples of data to be downloaded to the portable telephone as the portable terminal after completing the user authentication may be a communication fee data and an URL data of a portal site customized by the user. Specifically, for the former case, if it is a prepaid-type portable telephone for example, a user purchases a card corresponding to a certain communication fee and inputs a code printed in the card while connecting to a prescribed number. Thereby, registration of the communication fee is completed. The communication fee data is stored in an SIM card within the portable telephone and the amount is reduced every time a communication is achieved. A method for constituting a user' s own portal site as in the latter case is disclosed in Patent Literature 1 (Japanese Patent Unexamined Publication No. 2003-141154) and Patent Literature 2 (Japanese Patent Unexamined Publication No. 2003-345827). Both publications disclose a device which enables to customize a portal site for an individual use, in which a portal site displaying only links to the sites frequently accessed by the user oneself is built for always making an access to the site or for displaying such site screen. Thereby, it becomes possible for the user to easily access to the target site.

However, in both cases of the communication fee and the URL as described above, it is necessary to operate the portable telephone as a preparation. Thus, there still remain the same drawbacks as the ones described above. Especially, it is difficult for a user who has just purchased a portable telephone to perform operation for customizing the portal site. Therefore, the user would access to the portal site of the communication carrier or to the portal site of the terminal manufacturer provided in advance. Thus, the above-described drawbacks cannot be overcome.

Therefore, it becomes essential to provide and use an easily-operated device other than the portable telephone for performing prescribed processing to the portable terminal. Thus, the importance of user authentication has become increased when users log in to the device.

Patent Literature 1: Japanese Patent Unexamined Publication No. 2003-141154
Patent Literature 2: Japanese Patent Unexamined Publication No. 2003-345827

### DISCLOSURE OF THE INVENTION

### PROBLEMS TO BE SOLVED BY THE INVENTION

In recent years, an SIM card in which the identification data peculiar to the user is stored is mounted to a GSM-type portable telephone, so that the user authentication may be performed using the identification data stored in the SIM card when performing processing such as downloading the contents. Further, by storing the downloaded data in the SIM card in the case where the downloaded data is the data to be processed by specifying the user (the communication fee data, and the like), for example, it enables to perform read-out processing and the like easily and to keep the better security since the data is always stored with the identification data.

However, in the method for obtaining a prescribed data by using a separately placed device without operating the portable terminal as described above, it is necessary to remove the SIM card from the portable telephone for inserting it to the device. Thus, for performing the user authentication by reading out the identification data from the SIM card as described, it is necessary to remove the SIM card in each and every time, which is a troublesome and time-consuming work for the user. Further, if the SIM card is taken in-and-out of the portable telephone frequently, it increases the possibility of loosing and damaging the SIM card to which an important SIM_ID required for using the portable telephone is stored.

Further, if it is a system which performs the user authentication using the SIM card, a third party may log in unlawfully by copying the SIM card.

In order to overcome the foregoing shortcomings, it is an object of the present invention to provide a user-friendly user authentication system while improving the inconveniences of the conventional system as described above while, especially, improving the security.

### MEANS FOR SOLVING THE PROBLEMS

Therefore, the user authentication system of the present invention employs a configuration which comprises:
an address data storing device for storing an address data of a portable terminal owned by a user in advance by relating it to an identification data peculiar to the user for identifying the user;
an input device for receiving an input of the identification data from the user;
a corresponding data generating device for generating and storing a corresponding data which corresponds to the inputted identification data;
a corresponding data transmitting device for transmitting the corresponding data generated in the corresponding data generating device to the address data which is related to the identification data by extracting the address data from the address data storing device; and also
a collation device for collating to check, when the corresponding data is inputted by the user through the input device, whether or not the corresponding data is consistent with the corresponding data which has been generated and stored by the corresponding data generating device.

With such configuration, the present invention functions as follows. First, the user who owns the portable terminal registers in advance the address data of an E-mail and the like along with the identification data to the system which requires user authentication. By inputting the identification data from the input device of the system at the time of performing the user authentication, the corresponding data which corresponds to the identification data is generated and stored in the system, while the address data of the user is extracted by being referred to the identification data and the corresponding data is transmitted to the address data. Then, the user receives the corresponding data in the portable terminal and inputs it from the input device while seeing it. The system, then, performs collation to check whether or not the inputted corresponding data is consistent with the corresponding data which has been generated and stored in advance. When determined to be consistent, it is authenticated that the user making an access is the user oneself who owns the portable terminal with the address data being registered in advance. Thereby, the corresponding data which is generated every time the user logs in is transmitted to the portable terminal, and the user receiving the transmitted corresponding data inputs it to the system for receiving authentication. Therefore, it is possible to surely authenticate the user carrying the portable terminal so that the security can be enhanced.

Further, the user authentication system of the present invention employs a configuration which comprises:
an input device for receiving from a user an input of an address data of a portable terminal owned by the user;
a corresponding data generating device for generating and storing a corresponding data which corresponds to the inputted address data;
a corresponding data transmitting device for transmitting the corresponding data generated in the corresponding data generating device to the address data received in the input device; and also
a collation device for collating to check, when the corresponding data is inputted by the user through the input device, whether or not the corresponding data is consistent with the corresponding data which has been generated and stored by the corresponding data generating device.

With such configuration, the present invention functions as follows. First, the user who owns the portable terminal inputs the address data of an E-mail and the like to the system from the input device for receiving user authentication. Upon this, the corresponding data which corresponds to the identification data is generated and stored in the system, and the corresponding data is transmitted to the inputted address data. Then, the user receives the corresponding data in the portable terminal and inputs it from the input device while seeing it. The system, then, performs collation to check whether or not the inputted corresponding data is consistent with the corresponding data which has been generated and stored in advance. When determined to be consistent, it is authenticated that the user oneself, who owns the portable terminal with the address data, is performing log-in processing. Thereby, the corresponding data which is generated every time the user logs in is transmitted to the portable terminal, and the user receiving the transmitted corresponding data inputs it to the system for receiving authentication. Therefore, it is possible to surely authenticate the user possessing the portable terminal so that the security can be enhanced.

Furthermore, the user authentication system of the present invention employs a configuration which comprises:
an address data storing device for storing an address data of a portable terminal owned by a user in advance by relating it to an identification data peculiar to the user for identifying the user;
an input device for receiving an input of the identification data from the user;
a corresponding data generating device for generating and storing a corresponding data which corresponds to the inputted identification data;
a display device for displaying the generated corresponding data so as to be viewed by the user who has inputted the identification data to the input device;
an input screen transmitting device for transmitting an input screen data which is to be displayed in the portable terminal of the user for requesting an input of the corresponding data to the address data by extracting the address data being related to the identification data from the address data storing device; and also
a collation device for collating to check whether or not the corresponding data is consistent with the corresponding data which has been generated and stored by the corresponding data generating device by receiving the corresponding data from the portable terminal, which is inputted to the input screen displayed in the portable terminal.

Moreover, the user authentication system of the present invention employs a configuration which comprises:
an input device for receiving from a user an input of an address data of a portable terminal owned by the user;
a corresponding data generating device for generating and storing a corresponding data which corresponds to the inputted address data;
a display device for displaying the generated corresponding data so as to be viewed by the user who has inputted the address data to the input device;
an input screen transmitting device for transmitting an input screen data which is to be displayed in the portable terminal of the user for requesting an input of the corresponding data to the address data which is received in the input device; and also
a collation device for collating to check whether or not the corresponding data is consistent with the corresponding data which has been generated and stored by the corresponding data generating device by receiving the corresponding data from the portable terminal, which is inputted to the input screen displayed in the portable terminal.

With such configuration, the present invention functions as follows. When the user who owns the portable terminal inputs the identification data or the address data to the system from the input device for receiving user authentication, the corresponding data which corresponds to the identification data or the address data is generated and stored in the system, while the corresponding data is outputted from an output device which is provided together with the input device. Thus, the user can recognize the corresponding data. Also, almost simultaneously, a screen data to which the corresponding data can be inputted is transmitted to the address data which is extracted according to the identification data of the user or to the address data which is inputted to the input device in the beginning. Thereby, the input screen for inputting the corresponding data is displayed in the portable terminal of the user. When the user inputs the corresponding data displayed in the output device to the input screen of the portable terminal, the inputted corresponding data is transmitted to the system, and the system receives the corresponding data from the portable terminal. The system, then, performs collation to check whether or not the received corresponding data is consistent with the corresponding data which has been generated and stored in advance. When determined to be consistent, it is authenticated that the user making an access is surely the user oneself who carries the portable terminal which has transmitted the input screen. Therefore, the screen data for inputting the corresponding data which is generated every time the user logs in is transmitted to the portable terminal, and the corresponding data is inputted thereto for receiving authentication. Thus, it is possible to surely authenticate the user carrying the portable terminal so that the security can be enhanced.

Furthermore, the present invention is also a data providing system which performs user authentication by using the above-described user authentication system and provides a data to be used in a portable terminal to the portable terminal of the user after being authenticated. The data providing system employs a configuration which comprises:
a data request receiving device for receiving a data request inputted through the input device from a user who is authenticated as a result of the collation performed by the collation device; and
a requested data transmitting device for transmitting a prescribed data which corresponds to the received request to an address data of the user.

At this time, it may be in a configuration in which:
the data request receiving device comprises a portal specifying information receiving function for receiving portal specifying information from a user, which specifies contents of a portal site to be accessed by the portable terminal of the user; and
the requested data transmitting device comprises a function of transmitting a site address data to the portable terminal, which is accessible to a portal site being specified based on the portal specifying information.

Similarly, it may be in a configuration in which:
the data request receiving device comprises a deposit amount information receiving function for receiving deposit amount information from the user for specifying a deposit amount for a communication fee to be used in the portable terminal of the user; and
the requested data transmitting device comprises a function of transmitting a communication fee data in an amount according to the deposit amount information to the portable terminal.

With such configuration, it becomes possible to provide data such as contents to be used in the portable terminal to the user who is surely being authenticated. Thus, it is possible to further improve the security of the data communication. By providing a prescribed data to the portable terminal of the user by using the apparatus which comprises such input device, it becomes unnecessary to operate the operation unit of the portable terminal which is difficult to perform a complicated operation. Thus, it enables to obtain the data by a simple operation.

Furthermore, the present invention is also a user authentication input apparatus constituting the above-described user authentication system. The apparatus employs a configuration which comprises:
an identification data input receiving device for receiving from a user an input of an identification data which is peculiar to the user;
a corresponding data transmission requesting device for transmitting the inputted identification data to an authentication server connected through a network and also for requesting to the authentication server to generate a corresponding data which corresponds to the identification data and transmitting it to an address data of the portable terminal owned by the user who has inputted the identification data;
a corresponding data input receiving device for receiving from the user an input of the corresponding data transmitted to the portable terminal of the user from the authentication server; and
a collation requesting device for requesting to the authentication server to collate to check whether or not the inputted corresponding data is consistent with the data which has been generated in the authentication server.

Further, as another configuration of the user authentication input apparatus, it employs a configuration which comprises:
an address data input receiving device for receiving from a user an input of an address data of a portable terminal owned by the user;
a corresponding data transmission requesting device for transmitting the inputted address data to an authentication server connected through a network and also for requesting to the authentication server to generate a corresponding data which corresponds to the address data and transmitting it to the address data;
a corresponding data input receiving device for receiving from the user an input of the corresponding data transmitted to the portable terminal of the user from the authentication server; and
a collation requesting device for requesting to the authentication server to collate to check whether or not the inputted corresponding data is consistent with the data which has been generated in the authentication server.

Further, as another configuration of the user authentication input apparatus, it employs a configuration which comprises:
an identification data input receiving device for receiving from a user an input of an identification data which is peculiar to the user;
a corresponding data generation requesting device for transmitting the inputted identification data to an authentication server connected through a network and for requesting to the authentication server to generate and return a corresponding data which corresponds to the identification data, while requesting to transmit an input screen data which is to be displayed in the portable terminal of the user for requesting to the user an input of the corresponding data to an address data of the portable terminal owned by the user who has inputted the identification data; and
a display device for displaying the corresponding data returned from the authentication server so as to be viewed by the user who has inputted the identification data to the identification data input receiving device, wherein
the corresponding data displayed in the display device is a data which is inputted to the input screen displayed in the portable terminal of the user and transmitted to the authentication server for being collated to check whether or not it is consistent with the data which has been generated by the authentication server.

As still another configuration of the user authentication input apparatus, it employs a configuration which comprises:
an address data input receiving device for receiving from a user an input of an address data of a portable terminal owned by the user;
a corresponding data generation requesting device for transmitting the inputted address data to an authentication server connected through a network and for requesting to the authentication server to generate and return a corresponding data which corresponds to the address data, while requesting to transmit an input screen data which is to be displayed in the portable terminal of the user for requesting to the user an input of the corresponding data to the address data; and
a display device for displaying the corresponding data returned from the authentication server so as to be viewed by the user who has inputted the address data to the address data input receiving device, wherein
the corresponding data displayed in the display device is a data which is inputted to the input screen displayed in the portable terminal of the user and transmitted to the authentication server for being collated to check whether or not it is consistent with the data which has been generated by the authentication server.

Furthermore, the present invention is a user authentication server constituting the above-described user authentication system. The user authenticating server employs a configuration which comprises:
an address data storing device for storing an address data of a portable terminal owned by a user in advance by relating it to an identification data peculiar to the user for identifying the user;
a corresponding data generating device for receiving the identification data inputted by the user from an input device connected through a network and also for generating and storing a corresponding data which corresponds to the received identification data;
a corresponding data transmitting device for transmitting the corresponding data generated in the corresponding data generating device to the address data which is related to the received identification data by extracting the address data from the address data storing device; and also
a collation device for collating to check whether or not the corresponding data is consistent with the corresponding data which has been generated and stored by the corresponding data generating device by receiving the corresponding data inputted by the used from the input device.

Further, as another configuration of the user authentication server, it employs a configuration which comprises:
a corresponding data generating device for receiving an address data of a portable terminal owned by a user, which is inputted by the user from an input device connected through a network and also for generating and storing a corresponding data which corresponds to the received address data;
a corresponding data transmitting device for transmitting the corresponding data to the received address data; and also
a collation device for collating to check whether or not the corresponding data is consistent with the corresponding data which has been generated and stored by the corresponding data generating device by receiving the corresponding data inputted by the used from the input device.

As still another configuration of the user authentication server, it employs a configuration which comprises:
an address data storing device for storing an address data of a portable terminal owned by a user in advance by relating it to an identification data peculiar to the user for identifying the user;
a corresponding data generating device for receiving the identification data inputted by the user from an input device connected through a network and also for generating and storing a corresponding data which corresponds to the received identification data;
a display requesting device for requesting to the input device to display the generated corresponding data so as to be viewed by the user who has input the identification data to the input device;
an input screen transmitting device for transmitting an input screen data which is to be displayed in the portable terminal of the user for requesting an input of the corresponding data to the address data by extracting the address data which is related to the received identification data from the address data storing device; and also
a collation device for collating to check whether or not the received corresponding data is consistent with the corresponding data which has been generated and stored by the data generating device by receiving the corresponding data from the portable terminal, which is inputted to the input screen displayed in the portable terminal.

Furthermore, as yet another configuration of the user authentication server, it employs a configuration which comprises:
a corresponding data generating device for receiving an address data of a portable terminal owned by a user, which is inputted by the user from an input device connected through a network and also for generating and storing a corresponding data which corresponds to the received address data;
a display requesting device for requesting to the input device to display the generated corresponding data so as to be viewed by the user who has input the address data to the input device;
an input screen transmitting device for transmitting an input screen data which is to be displayed in the portable terminal of the user for requesting an input of the corresponding data to the received address data; and also
a collation device for collating to check whether or not the received corresponding data is consistent with the corresponding data which has been generated and stored by the corresponding data generating device by receiving the corresponding data from the portable terminal, which is inputted to the input screen displayed in the portable terminal.

Furthermore, the present invention is also a portable terminal used in the above-described user authentication system. The portable terminal of the present invention is a portable terminal having a prescribed address data for enabling to receive data, comprising:
a function of, by a user authentication system placed at a prescribed area, receiving an input of identification data peculiar to a user from an owner of the portable terminal, generating a corresponding data corresponded to the identification data, and receiving the corresponding data when the corresponding data is transmitted to the address data of the portable terminal; and
a function of displaying the received corresponding data in a display, wherein
the corresponding data is a data which is inputted to the user authentication system by the user to be collated to check whether or not it is consistent with the data which has been generated by the user authentication system.

As another configuration of the portable terminal, it employs a configuration which comprises:
a function of, by a user authentication system placed at a prescribed area, receiving an input of an address data of a portable terminal from a user who is an owner of the portable terminal, generating a corresponding data corresponded to the address data, and receiving the corresponding data when the corresponding data is transmitted to the address data of the portable terminal; and
a function of displaying the received corresponding data in a display, wherein
the corresponding data is a data which is inputted to the user authentication system by the user to be collated to check whether or not it is consistent with the data which has been generated by the user authentication system.

The present invention is also a user authentication method which is achieved by the above-described user authentication system. The user authentication method comprises:
an input receiving step for receiving from a user an input of an identification data peculiar to the user through an input device;
a corresponding data generating step for generating and storing a corresponding data which corresponds to the inputted identification data;
a corresponding data transmitting step for transmitting the corresponding data generated in the corresponding data generating step to an address data of the portable terminal owned by the user of the identification data by extracting the address data from an address data storing device-in which the identification data and the address data are stored in advance by being related to each other; and also
a collation step for collating to check, when the corresponding data is inputted by the user through the input device, whether or not the corresponding data is consistent with the corresponding data which has been generated and stored in the corresponding data generating step.

Furthermore, as another configuration of the user authentication method, it comprises:
an input receiving step for receiving from a user an input of an address data of a portable terminal owned by the user through an input device;
a corresponding data generating step for generating and storing a corresponding data which corresponds to the inputted address data;
a corresponding data transmitting step for transmitting the corresponding data generated in the corresponding data generating step to the received address data; and also
a collation step for collating to check, when the corresponding data is inputted by the user through the input device, whether or not the corresponding data is consistent with the corresponding data which has been generated and stored in the corresponding data generating step.

Furthermore, the present invention also provides a program which achieves the above-described user authentication system in a single computer or two or more computers.

As described above, with the configurations of the user authentication input apparatus, server, portable terminal, user authentication method, user authentication program as described above, the same function as that of the user authentication system as described above can be performed thereby enabling to achieve the above-described objects.

### ADVANTAGEOUS EFFECT OF THE INVENTION

The present invention is formed and functions as described above. With this, the corresponding data, which is generated every time the user logs in to the system by a manual input, is transmitted to the portable terminal. And the user receiving the corresponding data inputs it to the system by a manual input for receiving the authentication. Thus, it is possible to surely perform authentication of the user possessing the portable terminal so that the security can be enhanced. Furthermore, it is possible to perform the user authentication without removing the medium to which the user authentication data is stored from the portable terminal so that the convenience for the user can be improved.

### BRIEF DESCRIPTION OF THE DRAWINGS

[FIG. 1] FIG. 1 is a schematic diagram for showing the overall configuration of the present invention;
[FIG. 2] FIG. 2 is a functional block diagram for showing the configuration of a first embodiment of the present invention;
[FIG. 3] FIG. 3A - FIG. 3C are explanatory illustrations for showing the state where a user is using the present invention;
[FIG. 4] FIG. 4 is a sequence chart for showing the operation of the entire system including the user according to the first embodiment;
[FIG. 5] FIG. 5 is a sequence chart for showing the operation of the entire system including the user according to the first embodiment following FIG. 4;
[FIG. 6] FIG. 6 is a functional block diagram for showing the configuration of a second embodiment according to the present invention;
[FIG. 7] FIG. 7 is a flowchart for showing the operation of a user operation device of the second embodiment;
[FIG. 8] FIG. 8 is a flowchart for showing the operation of portal information editing processing as a part of the processing performed by the user operation device of the second embodiment;
[FIG. 9] FIG. 9 is a flowchart for showing the operation of a data managing server of the second embodiment;
[FIG. 10] FIG. 10 is a flowchart for showing the operation of portal site distribution processing as a part of the processing performed by the data managing server of the second embodiment;
[FIG. 11] FIG. 11 is a sequence chart for showing the operation of the entire system according to the second embodiment following FIG. 4;
[FIG. 12] FIG. 12 is a sequence chart for showing the operation of the entire system according to the second embodiment following FIG. 11;
[FIG. 13] FIG. 13 is a sequence chart for showing the operation of the entire system according to the second embodiment following FIG. 12;
[FIG. 14] FIGS. 14A, 14B are illustrations for showing examples of a screen displayed in the user operation device;
[FIG. 15] FIGS. 15A, 15B are illustrations for showing examples of a screen displayed in the user operation device;
[FIG. 16] FIGS. 16A, 16B are illustrations for showing examples of a screen displayed in the user operation device;
[FIG. 17] FIGS. 17A, 17B are illustrations for showing examples of a screen displayed in the user operation device;
[FIG. 18] FIG. 18 is an illustration for showing a list of menu which can be inserted to the portal site
[FIG. 19] FIGS. 19A, 19B are illustrations for showing examples of a screen displayed in the user operation device;
[FIG. 20] FIGS. 20A, 20B are illustrations for showing examples of a screen displayed in the user operation device; and
[FIG. 21] FIGS. 21A, 21B are illustrations for showing examples of a screen displayed in the user operation device.

### BEST MODE FOR CARRYING OUT THE INVENTION

The present invention is a user authentication system which can keep the security without inserting a memory medium in which an identification data is stored to be mounted to a portable terminal into a certain system (device), when a user who owns the portable terminal logs in to the system. Specifically, when the user oneself inputs the identification data and the like to the system, a corresponding data as an encoded data is transmitted to the portable terminal. Then, when the user inputs the encoded data again to the system, the user who carries the portable terminal at the moment can be surely authenticated thereby enabling to enhance the security.

In the followings, described in a first embodiment are the configuration and the method of the user authentication system which is mounted to a data providing system for distributing a prescribed data to a portable terminal. Also, a specific example of the data providing system will be described in a second embodiment. Further, another example of the user authentication system will be described in a third embodiment.

### FIRST EMBODIMENT

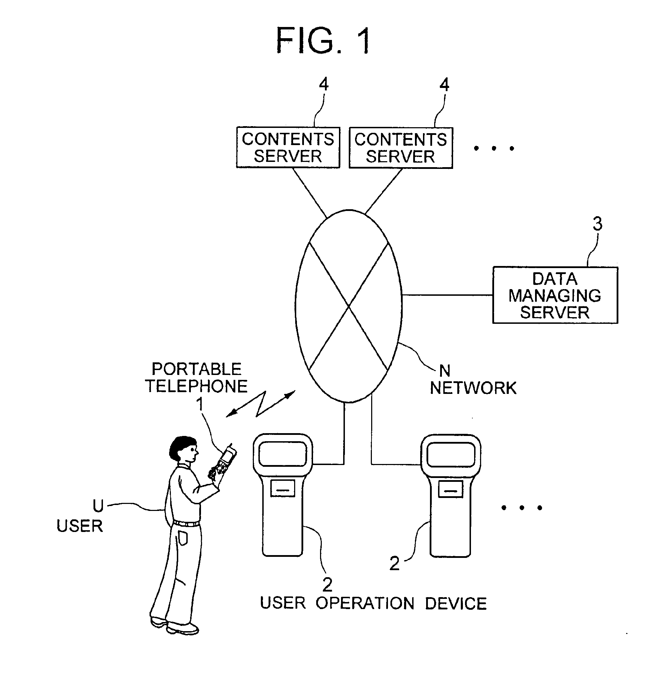

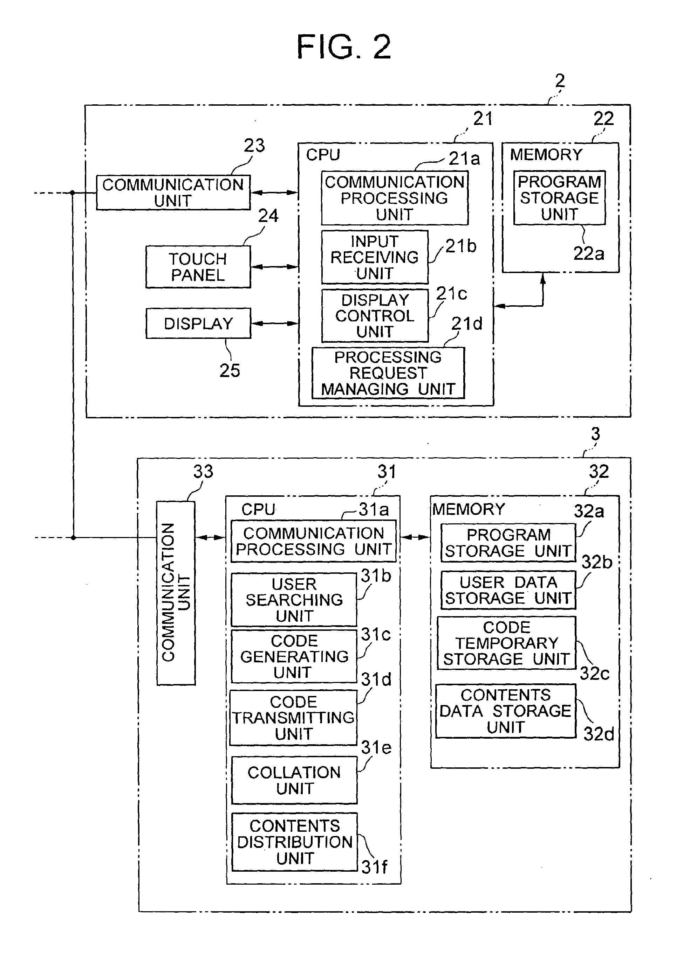

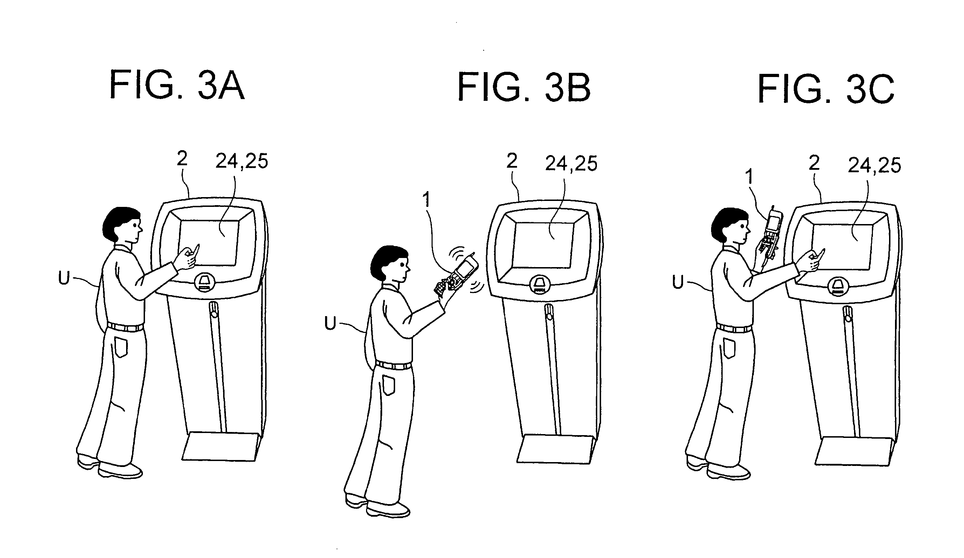

The first embodiment of the present invention will be described by referring to FIG. 1 - FIG. 5. FIG. 1 and FIG. 2 are block diagrams for illustrating an outline of the configuration of the present invention. FIG. 3 - FIG. 5 are explanatory illustrations for illustrating the operations of the present invention.

### (Overall Configuration)

The data providing system of the present invention is a system for providing various data to a portable terminal 1 (portable terminal) owned by a user U. The system comprises a user operation device 2 (user authentication input device) which is actually operated by the user, a data managing server 3 (user authentication server) for distributing a data to the portable telephone 1, and a contents server 4 for distributing the data which is managed by the data managing server 3. These elements are connected through a network N. Also, the portable telephone 1 can receive the data provided from the data managing server 3 through a radio network.

The user operation device 2 is a device through which the user logs in to the data providing system and inputs information for requesting a data, which functions as the user authentication system for performing user authentication at the time of log-in by working in association with the data managing server 3. Each configuration will be described in detail hereinafter. In the embodiment, especially, the user authentication system to which the user operation device 2 and the data managing server 3 are mounted will be described in detail.

### (Portable Telephone)

The portable telephone 1 is a portable terminal owned by a prescribed user, which can access to various web servers and obtain various contents by having a network connecting function.

Also, the portable telephone 1 can transmit and receive electronic mails and the address data of the electronic mails are registered in advance in the data managing server 3 to be described later. At the same time, the address data are registered by relating to identification data which are peculiar to each user U (see a user data storage unit 32b of the data managing server 3 shown in FIG. 2).

The terminal by which the user U receives the distributed data is not limited to be the portable telephone 1. It may be any portable-type information terminal as long as it has a network connecting function such as a PDA and a laptop computer and is possible to receive the data transmitted to the address of the electronic mail or the like. Further, the above-described address data is not limited to be the electronic mail address. For example, a telephone number used in a short mail service (SMS) of the portable telephone may be used as the address data.

### (User Operation Device)

FIG. 2 and FIG. 3 show the user operation device 2. The upper section of FIG. 2 shows the outline of the configuration by a block diagram and FIG. 3 shows the state where a user operates the device. The user operation device 2 is placed in portable telephone shops, convenience stores and the like, for example, so that the users can easily make an access while being out.

First, the external appearance of the user operation device 2 will be described by referring to FIG. 3. The user operation device 2 comprises a touch panel 24 on the upper section, which functions as an input device. This touch panel serves also as a display 25 (display device) for providing an operation screen to the user U. The inside is constituted by a computer, comprising a CPU 21 as an operation unit and a memory 22 as a storage unit or a hard disk. Further, the device can be connected to another computer through the network N, and it comprises a communication unit 23 as a communication device for achieving this.

A program 22a stored in the memory 22 in advance is read out and inserted to the CPU 21. Thereby, each processing unit described below is built and also the processing, which will be described at the time of describing the operations, is achieved. That is, built in the CPU 21 are: a communication processing unit 21a for achieving communication with other computers, specifically, with the data managing server 3 through a communication unit 23; an input receiving unit 21b for receiving the data inputted by the user U through the touch panel 24; a display control unit 21c for displaying an operation screen on the display for the user U; and a processing request managing unit 21d for requesting to the data managing server 3 a prescribed processing according to the input from the user and also for receiving and managing the data which is returned according to the request.

Specifically, the input receiving unit 21b receives the identification data peculiar to the user for identifying the user, which is inputted through the touch panel 24 by the user (identification data input receiving device) and transmits it to the processing request managing unit 21d. Then, the processing request managing unit 21d informs the data managing server 3 through the communication processing unit 21a that there is a log-in request from the user U of the identification data, and requests to issue a password and to transmit it to the portable telephone 1 (corresponding data transmission requesting device).

Further, as will be described later, the input receiving unit 21b receives an input of the password (corresponding data) which is transmitted from the data managing server 3 to the portable telephone 1 of the user U (the corresponding data input receiving device), and transmits it to the processing request managing unit 21d. Then, the processing request managing unit 21d requests a collation of the password to the data managing server 3 (the collation requesting device).

Further, after the user authentication, the input receiving unit 21b receives an input of information indicating that the user is requesting the data to be used in the portable telephone 1 (the data request receiving device), and transmits it to the processing request managing unit 21d. Then, the processing request managing unit 21d informs the data request information to the data managing server 3. Thereby, the data such as contents desired by the user are to be distributed from the data managing server 3 to the portable telephone 1 later on.

### (Data Managing Server)

The data managing server 3 is an ordinary server computer, comprising a CPU 31 as an operation unit, a memory 32 or a hard disk as a storage device, a user operation device 2 and a portable telephone 1 owned by a user and, further, a communication unit 33 for achieving a communication with a contents server 4 on a network N. As described above, the data managing server 3 performs the user authentication and distribution of the data according to the information inputted to the user operation device 2 by the user. Especially, the role as the user authentication server will be described in the embodiment.

A user data storage unit 32b (the address data storing device) is formed in the memory 32 and the address data of the portable terminal owned by the user is stored in advance along with the identification data peculiar to the user for identifying the user. Further, formed are: a program storage unit 32a for storing a program to be installed to the CPU 31; a code temporary storage unit 32c for temporarily storing a code generated by the data managing server 3 as will be described later; and a contents data storage unit 33d for storing the contents data which is provided by the contents server 4 to be distributed to the portable telephone 1 of the user U.

Further, by installing of a specific program within the program storage unit 32a, built in the CPU 31 of the data managing server 3 are: a communication processing unit 31a for controlling the communication between with the computers on the network N; a user searching unit 31b for checking whether or not the identification data inputted to the user operation device 2 in response to a request from the user operation device 2 is registered in the user data storage unit 32b in advance and for extracting the address data of the user when it is determined to be registered; a code generating unit 31c (the corresponding data generating device) for generating a password which corresponds to the identification data received from the user operation device 2 and for storing the password to the code temporary storage unit 32c by relating it to the identification data; and a code transmitting unit 31d (the corresponding data transmitting device) for transmitting the generated password to the address data extracted by the above-described user searching unit 31b.

Further, built in the CPU 31 is a processing unit which performs collation of the password when the password transmitted to the portable terminal 1 of the user as described above is inputted to the user operation device 2 by the user and is then transmitted to the data managing server 3. That is, built is a collation unit 31e (the collating device) which performs collation for checking whether or not the password is consistent with the password which has already been stored in the code temporary storage unit 32c when receiving form the user operation device 2 the password inputted through the touch panel 24 of the user operation device 2 by the user U. When determined to be consistent as a result of the collation, the user U is authenticated and the log-in is succeeded. Also, built is a contents distribution unit 31f (the requested data transmitting device) for extracting the corresponding contents from the contents data storage unit 32d for distributing the contents to the portable terminal 1 of the user U upon receiving the data for designating the desired contents from the user operating device 2, which is inputted by the user U after the log-in through the touch panel 24 of the user operating device 2.

### (Operation)

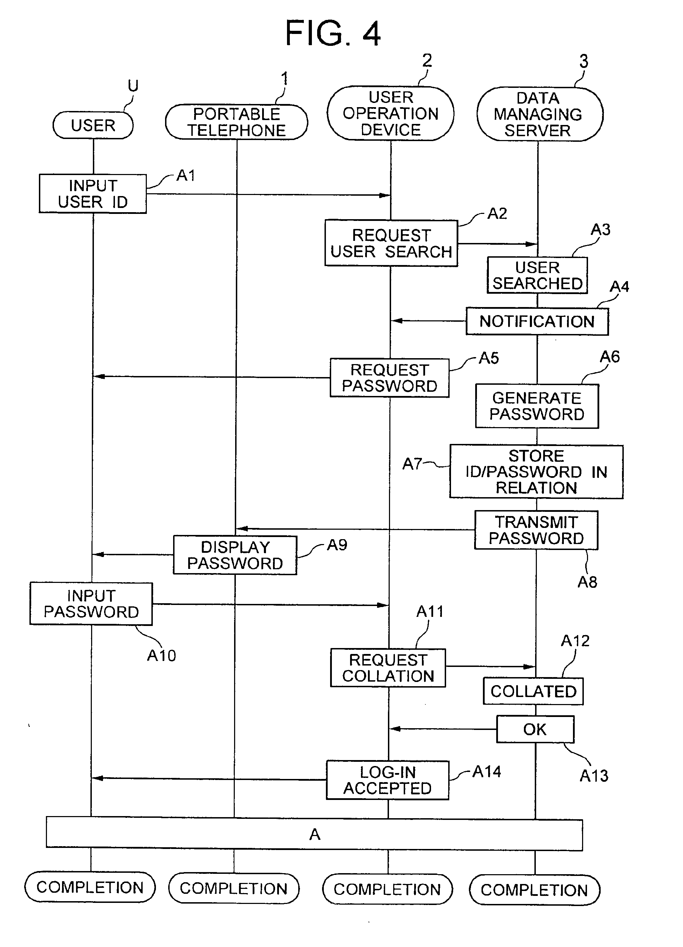

Next, the operations of the data providing system which uses the user authentication system with the above-described configuration will be described by referring to FIG. 3 - FIG. 5. FIG. 3 is an explanatory illustration for showing the state where the user U operates the user operation device 2. FIG. 4 - FIG. 5 are sequence charts for showing the operations of the entire system.

First, as shown in FIG. 3A, the user U operates the touch panel 24 according to instructions displayed in the display 25 of the user operation device 2 for inputting a user ID as an identification data peculiar to the user, which is determined in advance (step A1). Upon this, the user operation device 2 transmits the user ID after receiving it in the input receiving unit 21b to the data managing server 3 through the processing request managing unit 21d for requesting to search the user (step A2). Thereby, the user searching unit 31b of the data managing server 3 searches the user under the user ID in the user data storage unit 32b (step A3) and, when determined that the user is in the storage unit, it informs so to the user operation device 2 (step A4). Further, at this time, the address data stored along with the user ID is extracted to be transmitted to the code transmitting unit 31d. Upon receiving the notification, the user operation device 2 displays a screen for requesting an input of the password on the display 25 (step A5).

Then, the password is generated in the code generating unit 31c of the data managing server 3 (step A6) and the user ID and the password are stored in the code temporary storage unit 32c by being related to each other (step A7). Further, the password is transmitted by the code transmitting unit 31d to the address data which is extracted by the above-described user searching unit 31b. That is, it is transmitted to the portable telephone 1 owned by the user U who has inputted the user ID (step A8). Thereby, as shown in FIG. 3B, an electronic mail for informing the password is transmitted to the portable telephone 1 of the user U shortly after the user ID is inputted to the user operation device 2.

Upon receiving it, the user U displays the password on the display of the portable telephone 1 as shown in FIG. 3C (step A9), and inputs the password from the touch panel 24 according to the password input screen displayed on the display 25 of the user operation device 2 (step A10) . The password is received in the input receiving unit 21b and is transmitted to the collation unit 31e of the data managing server 3 through the processing request managing unit 21d. At this time, the user operation device 2 requests a collation of the password to the data managing server 3 (step A11). Thereby, the collation unit 31e of the data managing server 3 checks whether or not the password is stored in the code temporary storage unit 32c (step A12) and when determined to be consistent, it is informed so to the user operation device 2 (step A13). Then, it is displayed on the display 25 of the user operation device 2 that the log-in is completed (step A14). Thereby, in FIG. 4, the processing up to the reference code A is performed and the user authentication processing is completed.

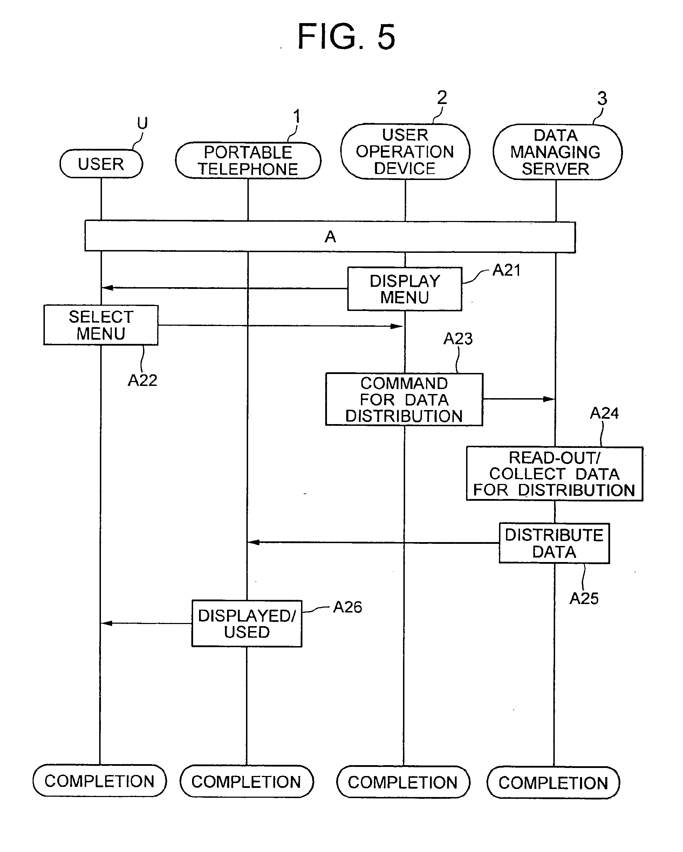

Subsequently, as shown in FIG. 5, a menu screen of the services provided by this system after the log-in is displayed on the display 25 (step A21). The user U selects the menu through the touch panel 24 and inputs the information for designating the desired contents (step A22). Upon receiving it, the user operation device 2 transmits the contents designating information to the data managing server 3 and also gives a command to distribute the designated contents to the portable telephone 1 of the user U (step A23) . Upon this, the data managing server 3 reads out the target contents and the like to be provided from the contents data storage unit 32d or collects the contents from the contents server 4 on the network N (step A24) for distributing the data to the address data of the portable terminal 1 (step A25). Thereby, the user U can display and view the data received in the portable telephone 1 or can use the data (step A26).

Illustrated above is the case where the data providing system and the user authentication system mounted thereto, which are of the present invention, are formed with the user operation device 2 and the data managing server 3. However, it is not necessarily limited to this. For example, the user operation device 2 may have all the configurations of the data managing server 3 and each system of the present invention may be formed with the user operation device 2 alone.

Thereby, when logging in to the system, the user ID is inputted and, accordingly, the password which is generated in every log-in processing is transmitted to the portable terminal. And the user receiving the password inputs it for receiving the authentication. Therefore, authentication of the user carrying the portable terminal can be surely performed so that it enables to enhance the security. Further, through the configuration in which a prescribed data is provided to the portable terminal of the user by using the device comprising the input device such as the above-described touch panel 24, it becomes unnecessary to operate the operation unit of the portable terminal which is hard to perform complicated operations. Thus, the data can be obtained by a simple operation. Further, with such device, it is not necessary to remove the SIM card or the like to which the identification data is stored for performing the authentication processing.
Therefore, it is possible to achieve the user authentication under a high security by a simpler configuration.

### (Modification Example)

Next, Modification Example 1 of the above-described user authentication system will be described. In the above-described configuration, illustrated is the case where the user who is to log in inputs the identification data first. However, it may be in the configuration in which the user inputs the address data of the portable terminal owned by the user instead of inputting the identification data.

The address data to be inputted is a telephone number of the portable telephone, for example, which is to be the address of the short message service (SMS). Further, an address of an electronic mail which can be received by the portable terminal may be used as the address data.

On the system side which has received the address data inputted by the user through the touch panel 24, as in the above-described case, a password as a corresponding data which corresponds to the address data is generated and stored. Subsequently, the generated password is transmitted to the address data inputted in the beginning. Thereby, as in the above-described case, the password is received in the portable terminal owned by the user. Upon receiving it, the user displays the password in the portable terminal and inputs it through the touch panel. Thereby, the user authentication is performed in the system.

Even with such configuration, the corresponding data generated for every log-in processing is transmitted to the portable terminal and the user receiving the password inputs it for receiving authentication. Therefore, the authentication of the user carrying the portable terminal can be surely performed so that the security can be enhanced.

### (Modification Example 2)

Next, another Modification Example of the user authentication processing will be described. The basic authentication method is the same as the one described above. However, authentication may be performed by considering the present location of the portable telephone 1 of the user. For example, the data managing server 3 stores in advance the locations of all the user operation devices 2 being placed and recognizes the location of the user operation device 2 to which the user U inputs the user ID and the password. Further, the data managing server 3 obtains the positional information of the portable telephone 1 which is the target of transmitting the password at the point (or may be before or after) where the password is inputted to the user operation device 2. If the data managing server 3 is the carrier of the portable telephone, for example, it is easy to obtain the information. However, if it is not, the positional information of the portable telephone is obtained separately from a server run by the carrier of the portable telephone based on the user ID and the address data. In other words, the positional information measured by the base station of the portable telephone may be obtained. The way of measuring the position of the portable telephone is not limited to this method. The positional information measured by a GPS provided to the portable terminal may be obtained by directly receiving it from the portable telephone to which the password is transmitted.

The data managing server 3, as described above, obtains the positional information of the portable telephone and the positional information of the user operation device together with authentication of the password and performs authentication to check whether or not the positional information is almost consistent. For example, when they are located within a radius of 3 m, it can be recognized that the user is in operation of the user operation device 2 by using the portable telephone which has received the password transmitted from the data managing server 3. Only then, log-in by the user may be permitted. Thereby, it is possible to surely authenticate that the user who is in operation of the user operation device 2 and the user carrying the portable telephone is the same, thereby enabling to further enhance the security.

### SECOND EMBODIMENT

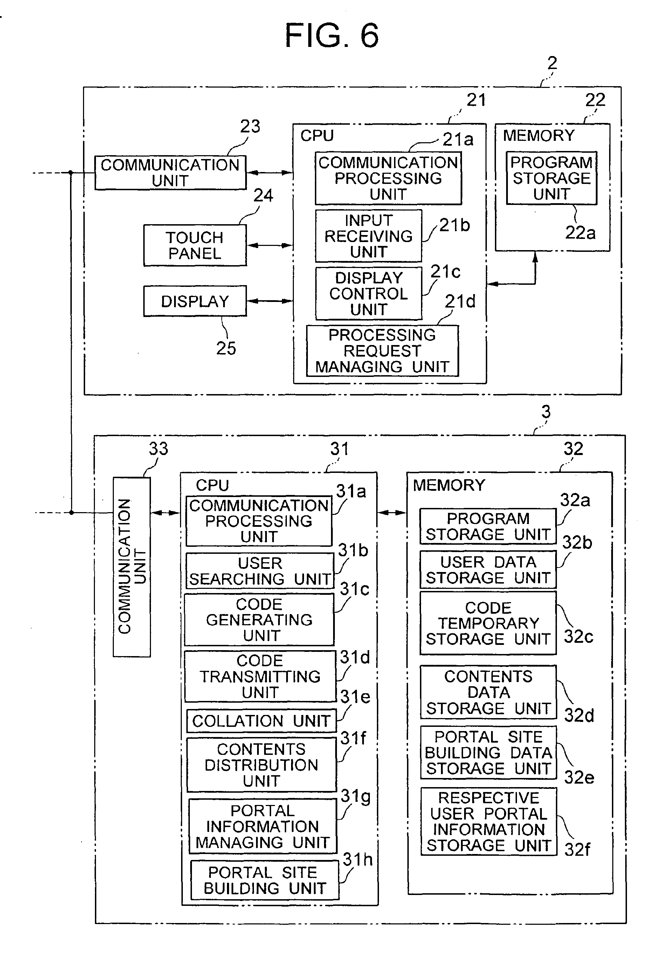

Next, a second embodiment of the present invention will be described by referring to FIG. 6 - FIG. 21. The embodiment is a data providing system using the user authentication system described in the first embodiment. Specifically, it is a system in which a user' s personal portal site accessed by the portable telephone as the portable terminal owned by the user is set and the system receives the URL being provided as an address data which is accessible to the site.

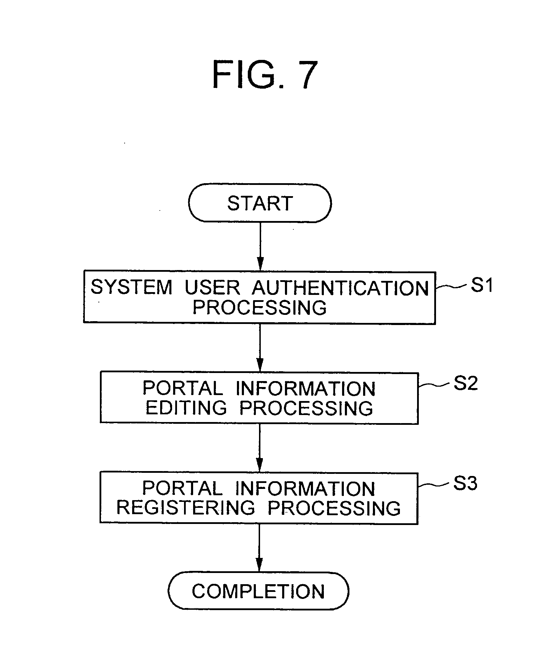

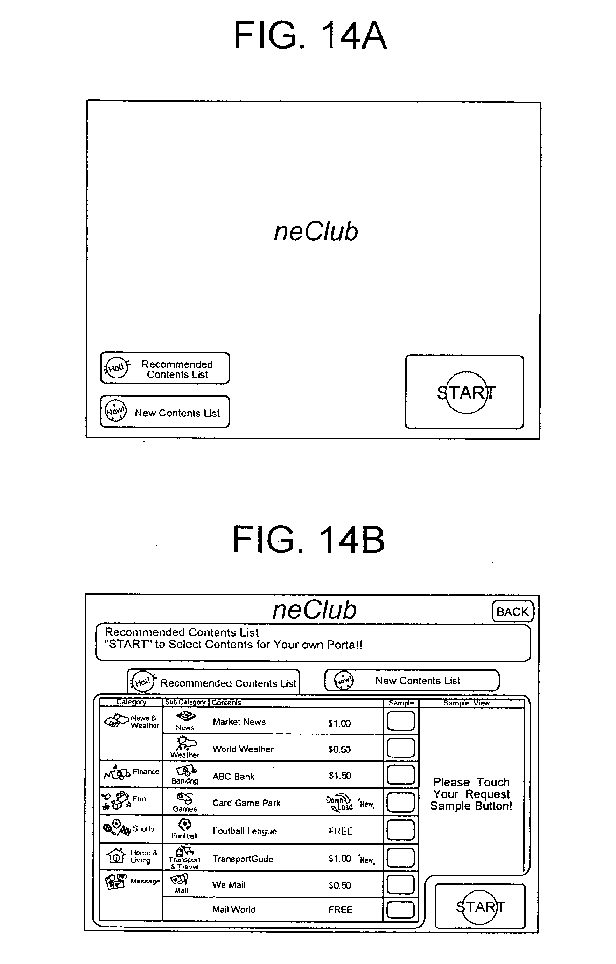

FIG. 6 is a functional block diagram for showing the configuration of the system. FIG. 7 - FIG. 13 are explanatory illustrations for showing the operation of the user and the system, while FIG. 14 - FIG. 21 are illustrations for showing examples of the screens displayed on the user operation device 2 through which the user performs input operations.

### (Overall Configuration)

The data providing system of the embodiment is similar to the one shown in FIG. 1, which comprises: a user operation device 2 (user authentication input device) which is actually operated by the user; a data managing server 3 (user authentication server) for distributing the data to the portable telephone 1; and a contents server 4 for distributing the data managed by the data managing server 3. These elements are connected through a network N.

The outline of the operation in the system will be described. First, the user of the portable telephone 1 performs log-in processing upon receiving the user authentication by using the user authentication system as described above. Then, by selecting the website desired by the user oneself on the display 25 of the user operation device 2, the address data of the portal site which displays the link to the site as a menu is transmitted to the portable telephone 1. Upon receiving it, the portable telephone stores the address data to an inside memory so that it becomes easy to make an access to a portal site with a menu items selected by the user oneself based thereupon. Further, by operating the user operation device 2, it is possible to obtain the desired contents from the Internet to the portable telephone 1.

As described above, the user can easily use the web services through the placed user operation device 2 without using the portable terminal which is hard to operate, so that it is possible to improve the convenience for using the web. At the same time, when using such web services, it is possible to improve the safety through receiving the user authentication under a high security as described above.

### (Portable Telephone)

The portable telephone 1 is a portable terminal owned by a prescribed user, which can access to various web servers and obtain various contents by having a network connecting function.

Further, the portable telephone 1, specifically, is a GSM-type telephone. The GSM-type is mainly used in Europe, which is a system using an SIM card for identifying a subscriber. The SIM card is an abbreviation of Subscriber Identify Module, which is issued when subscribing to the GSM service and can be used by being set in the GSM-type portable telephone. In the SIM card, stored are: an SIM_ID which is peculiar to each card; telephone number as the information of the subscriber; a PIN code as a personal identification number, and the like. It is in a system that the GSM-type telephone cannot be used until the SIM card is being set.

Further, the portable telephone 1 has a function of accessing to the URL by reading out an address data when the address data of the portal site is stored in advance when connecting to the Internet. For example, the URL of the portal site is stored within the SIM card, and the portable telephone 1 has a function of accessing to the portal site by reading out the URL within a specific region of the SIM card. The URLs stored in the SIM card are stored by receiving the data provided from the data providing server 3 by an electronic mail and the like as will be described later.

### (User Operation Device)

FIG. 6 shows the configuration of the user operation device 2. As shown in the drawing, this user operation device 2 has almost the same configuration as that of the user operation device as illustrated in the first embodiment. Specifically, in this embodiment, a portal editing unit 21e for setting the desired portal site according to an input of the user is additionally provided to the CPU 21. The portal editing unit 21e functions as a device for receiving data requests from the user after the log-in. Specifically, it functions as a portal specifying information receiving function which receives the portal specifying information from the user for specifying the contents of the portal site which is accessed by the portable terminal of the user.

The portal specifying information received in the portal editing unit 21e is transmitted to the data managing server 3 and managed by the server by each user. Then, in response to an access from the user, a portal site peculiar to the user is built based on the portal specifying information and is transmitted to be displayed in the portable terminal of the user.

Now, the portal site in the present invention is a site which is displayed when starting the Internet connection through the portable terminal 1. In general, there are portal sites provided by communication carriers, sites provided by manufactures of the terminal, and also portal sites to which various search engines are mounted. However, in the present invention, the portal site is not necessarily limited to be the website. It may be a data stored in the portable terminal, which is as a screen data to be essentially displayed when connecting to the Internet.

### (Data Managing Server)

Further, FIG. 6 also shows the configuration of the data managing server 3. As shown in the drawing, the data managing server 3 has almost the same configuration as that of the data managing server 3 illustrated in the first embodiment. Especially, in this embodiment, built in the CPU 31 are a portal information managing unit 31g which manages the portal specifying information received from the above-described user operation device 2, and a portal site building unit 31h for building and providing the portal site according to an access from the user through the portable telephone. Further, a contents distribution unit 31f transmits the URL as the address data accessible to the portal site to the portable telephone 1 according to the portal information from the user.

In accordance with this, formed in a memory 32 are a respective user portal information storage unit 32f which stores the portal information received from the user operation device 2 by each user, and a portal site building data mechanism unit 32e for storing the portal site building data as a material for building the portal site.

Further, the data managing server 3 has functions of providing the screen data to be displayed on the display 25 of the user operation device 2 and of controlling the transition state.

### (Operations)

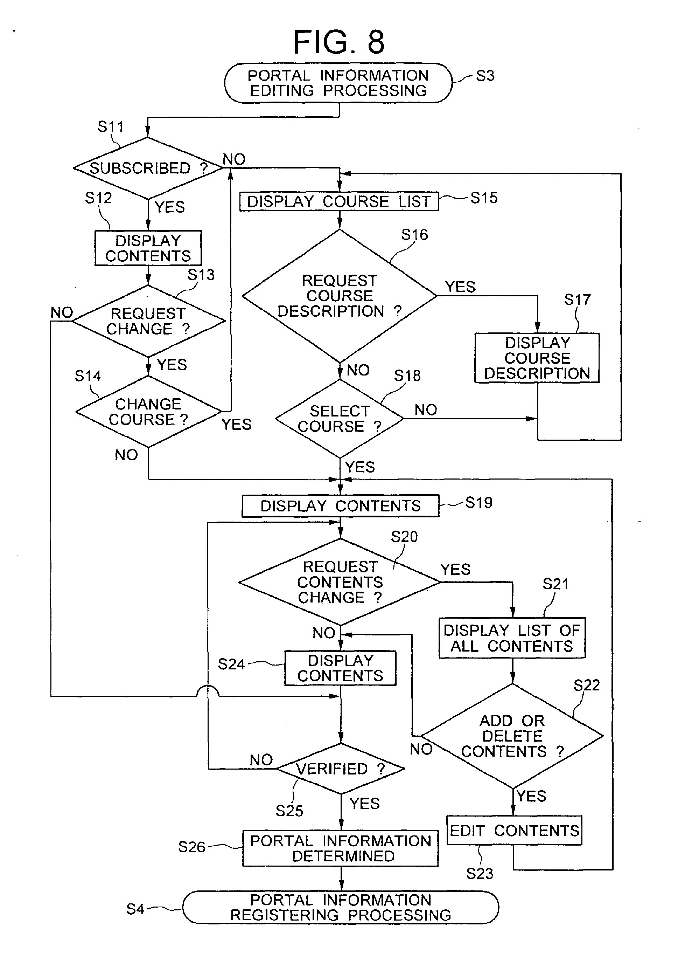

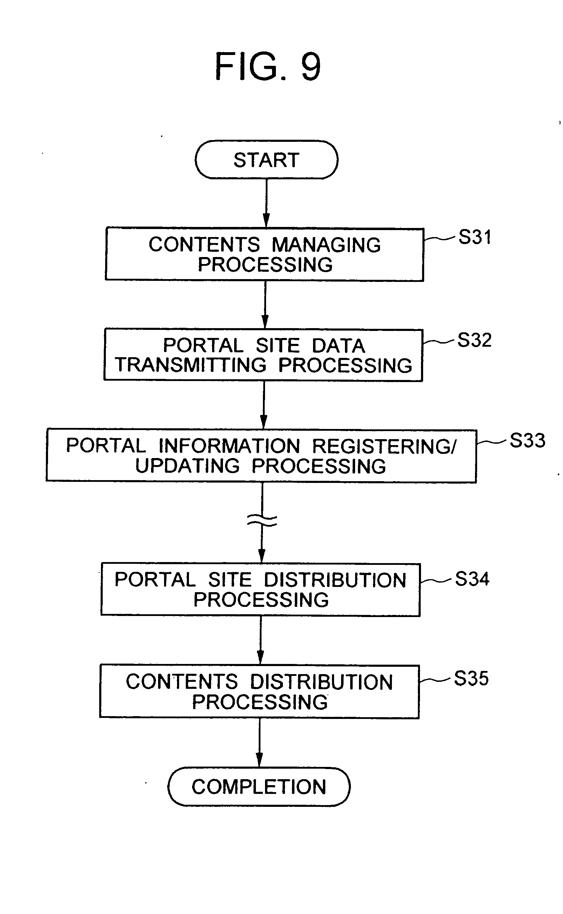

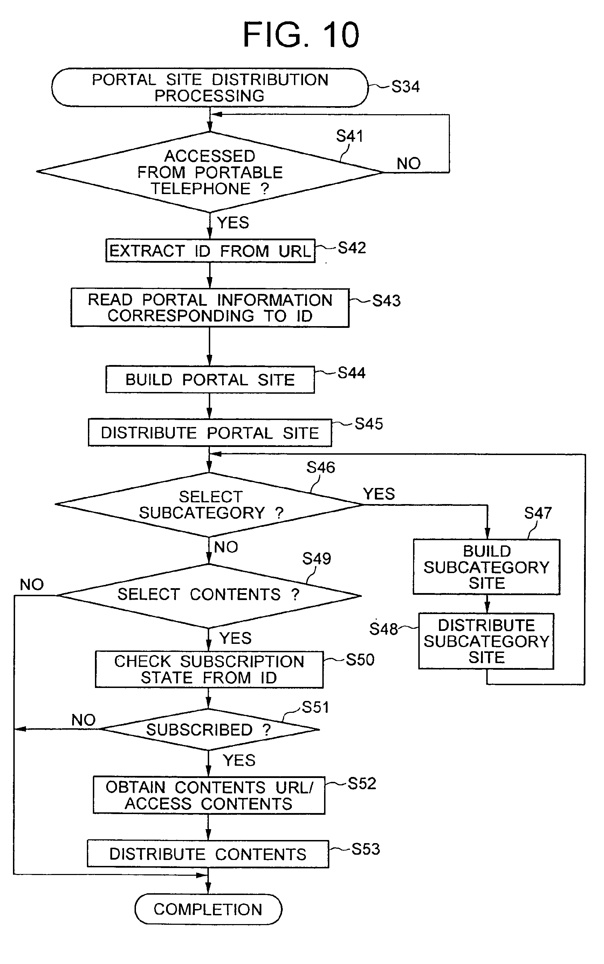

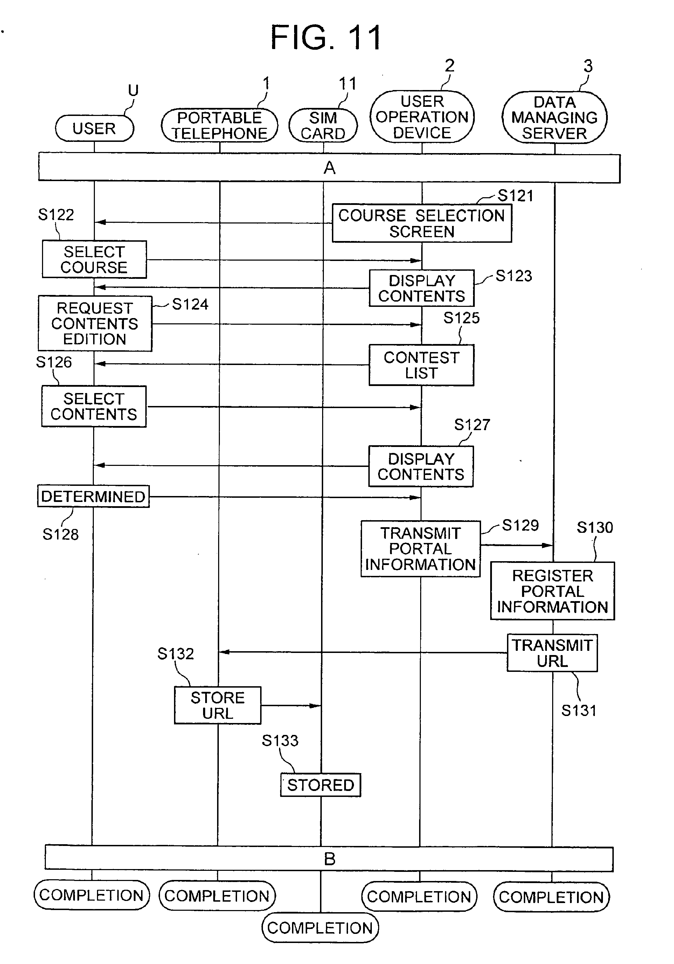

Next, the operations of the above-described system will be described by referring to FIG. 7-FIG.21. FIG. 7 is a flowchart for showing the operation of the user operation device 2 and FIG. 8 is a flowchart for showing the operation of the portal information editing processing as a part of its processing. Further, FIG. 9 is a flowchart for showing the operation of the data managing server 3 and FIG. 10 is a flowchart for showing the operation of the portal site distribution processing as a part of its processing. FIG. 11 - FIG. 13 are sequence charts for showing the operation of the entire system. FIG. 14 - FIG. 21 are illustrations for showing the screens displayed on the display 25 of the user operation device 2. In the followings, the operation of the entire system will be described by referring to the sequence charts of FIG. 11 - FIG. 13. At the same time, the details of the operation will be described by referring to other drawings.

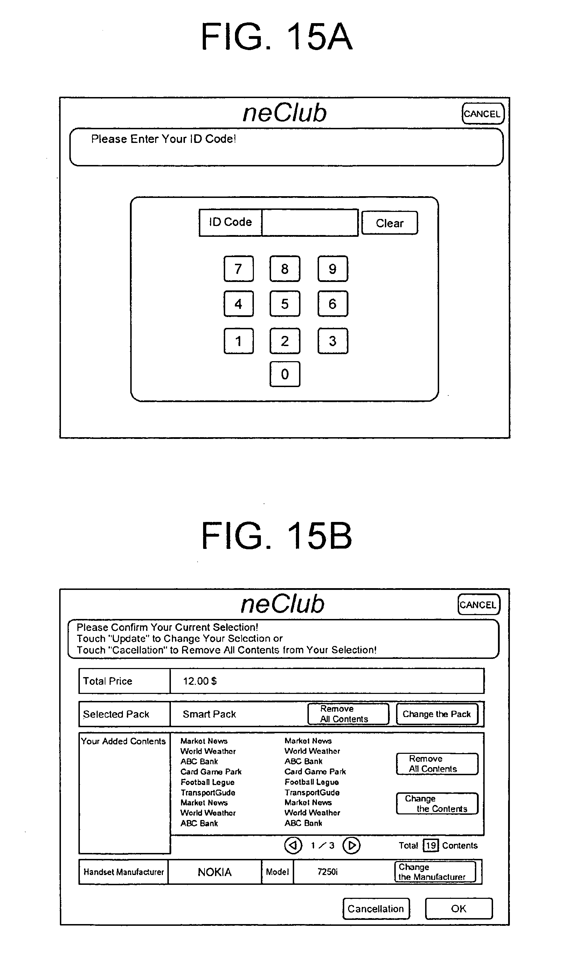

First, the user of the portable telephone 1 performs the log-in processing to the system as shown in FIG. 4 as described in the first embodiment. At this time, first, the screen as shown in FIG. 14A is displayed on the display 25. When the user selects a button positioned in the bottom left of the screen, the update information of the contents which can be inserted to the portal site is displayed as shown in FIG. 14B. The contents update information is also provided from the data managing server 3 (the contents data storage unit 31d). When a "START" button positioned in the bottom right of the screen in FIG. 14A is selected, an ID code input screen as shown in FIG. 15A is displayed. The identification data as the user ID is inputted to the user operation device 2 and a password transmitted in response to the portable telephone 1 is received. Then, by inputting the password again to the user operation device 2 on the screen similar to the one shown in FIG. 15A, user authentication is performed, thereby completing the log-in processing (the processing up to the reference code A of FIG. 4, step S1 of FIG. 7).

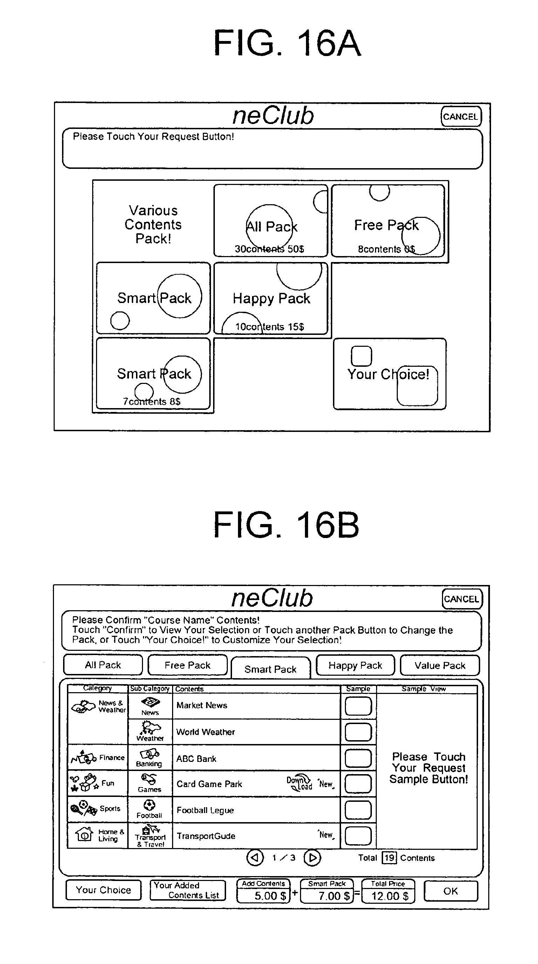

After the log-in processing, it is authenticated that the operation is performed by the user oneself. Therefore, if the structural information of the portal site peculiar to the user has already been registered (YES in step S11 of FIG. 8), the portal information of the portal site which is presently subscribed by the user of the identification data (ID data) is read out from the respective user portal information storage unit 32f and a screen is displayed for showing the contents for verification (see FIG. 15B, step S12 of FIG. 8). If there is no change in the contents of the portal site (NO in step S13 of FIG. 8), it proceeds to check whether or not the present portal site is fine (step S25 of FIG. 8). In the meantime, if there is a request for a change (YES in the step S13 of FIG. 8) and the course of the portal site is not to be changed (NO in step S14 of FIG. 8), it proceeds to step S19 which will be described later. When the course is to be changed (Yes in the step S14 of FIG. 8), it proceeds to the same processing as the case of unsubscribed users. Then, as shown in FIG. 16A, a list of the courses of the portal site are displayed (step S15 of FIG. 8, step S121 of FIG. 11) . As for the courses of the portal site, some basic ones are prepared in which the contents of the portal sites are determined in advance, and kinds of the accessible websites vary for each course.

For checking the contents of each course, by selecting a course description requesting button (YES in step S16 of FIG. 8), the contents of the links (a list of the websites) contained in each course in advance is displayed (step S17 of FIG. 8). If "Smart Pack" is selected here (YES in step S18 of FIG. 8, step S122 of FIG. 11), the contents contained in advance in the selected course is displayed (step S19 of FIG. 8, step S123 of FIG. 11) as shown in FIG. 16B.

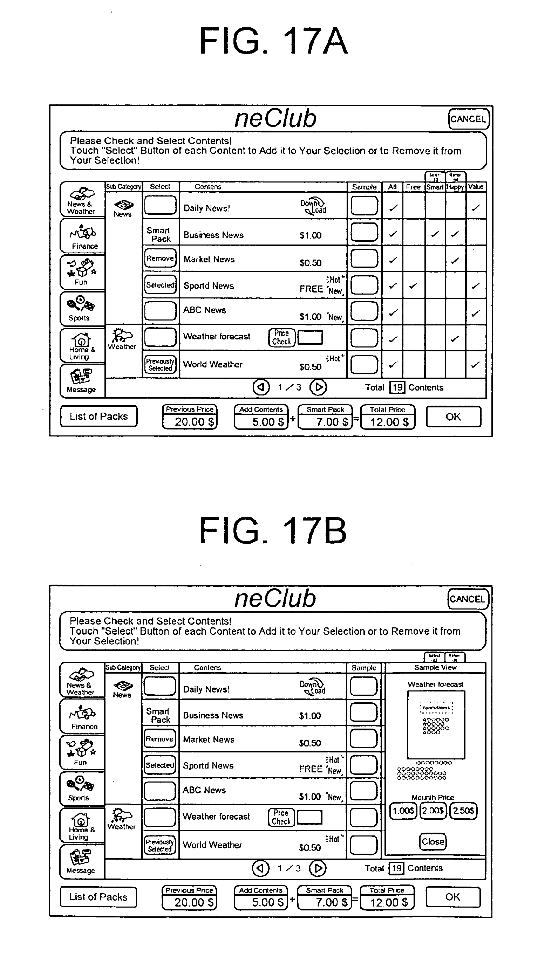

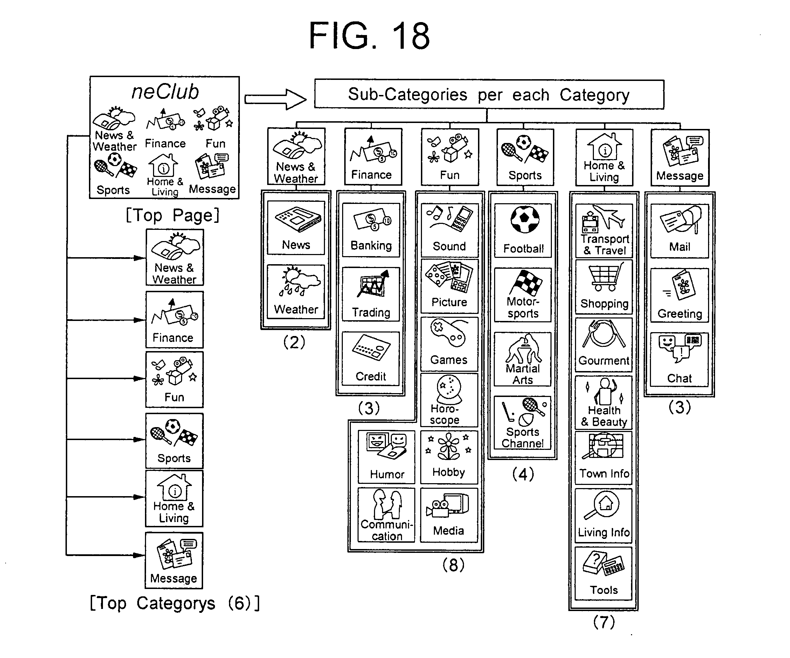

Upon this, if the user desires to change the contents of the selected course, the user requests editing of the contents (YES in step S20 of FIG. 8, step S124 of FIG. 11). In response to the editing request, the user operation device 2 displays a screen of the contents list as shown in FIG. 17A (step S21 of FIG. 8, step S125 of FIG. 11). Then, the user inputs the information for selecting the contents to the user operation device 2 (YES in step S22 of FIG. 8, step S126 of FIG. 11) when adding the contents. For example, by clicking the display of each of the contents shown in FIG. 17A by a mouse for checking the section of the presently selected course through a check box, a new link can be added to be displayed in the portal site of the course (step S23 of FIG. 8). At this time, for checking the details of each of the contents, as shown in FIG. 17B, an example of the screen displayed in the contents or the description data of the contents is displayed by pressing a "sample" button. The contents data at this time may be the one which is transmitted from the data managing server 3 in the beginning, or the data to be displayed in the user operation device 2 may be requested to the data managing server 3 every time a selection is made by the user. In the embodiment, as the contents which can be added to the portal site, there are ones shown in FIG. 18, for example, which are provided in the hierarchy of the top category, respectively. That is, when the portal site is displayed, first, six categories are shown on the top page, and by selecting a category, the menu of the selected category is displayed.

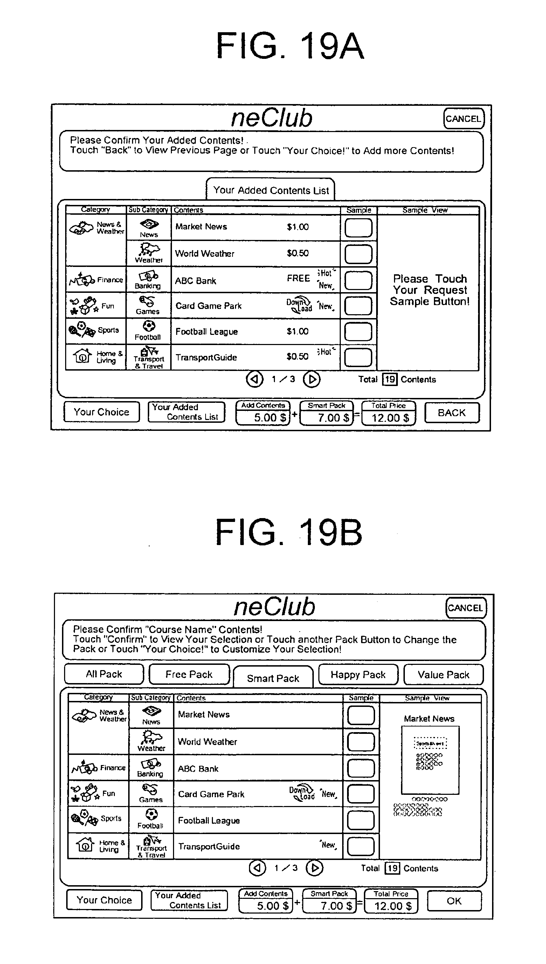

Upon receiving the information from the user for selecting the contents, the user operation device 2 displays the menu of the portal site reflecting the contents, e.g., the details of the added contents (FIG. 19A) and a menu list of the portal sites (FIG. 19B) to which the details of the contents are inserted (step S24 of FIG. 8, step S127 of FIG. 11) . Further, when the user desires to change the contents after viewing the menu, the user inputs the request for editing (changing) the contents again for adding or canceling the contents (NO in step 25 of FIG. 8) as described above.

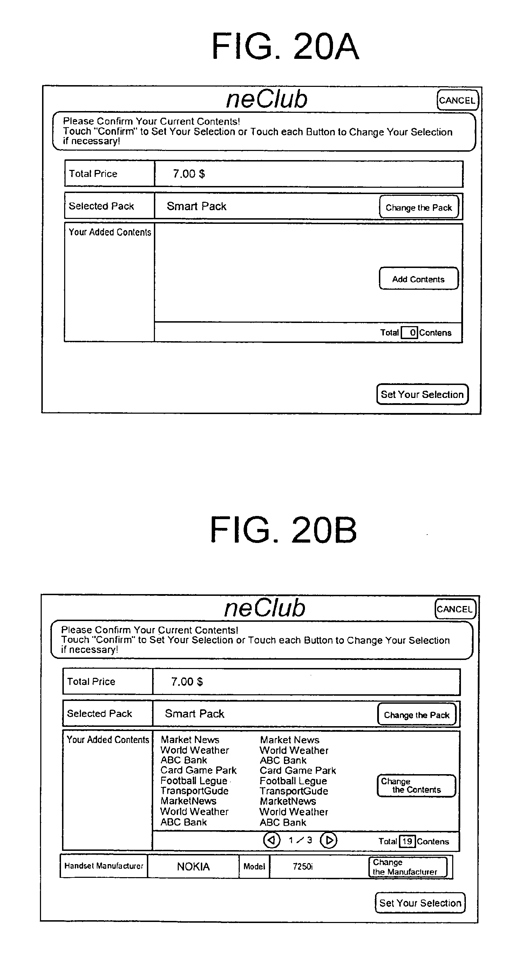

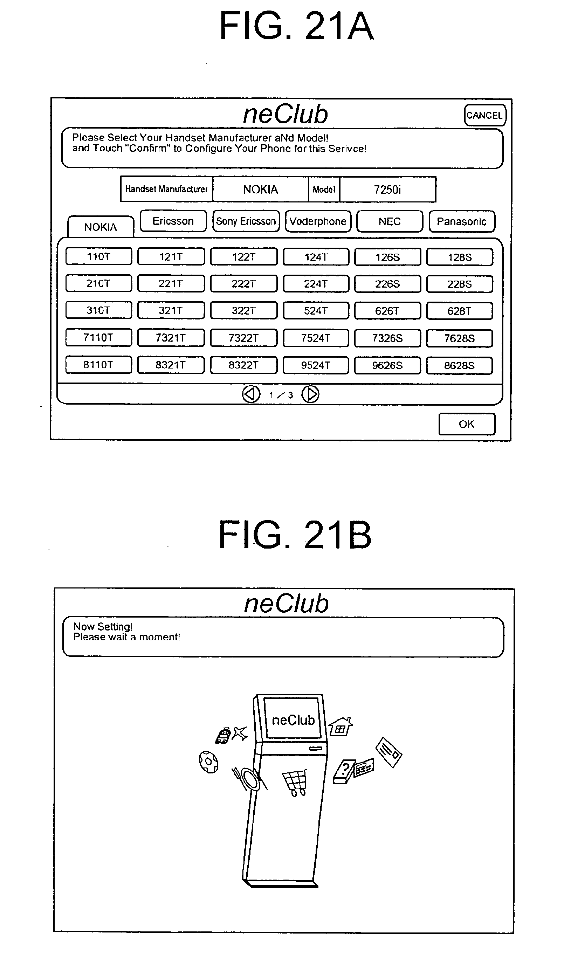

After completing the editing of the contents, the user presses the "OK" button on the screen of the user operation device 2. Thereby, as shown in FIG. 20A or FIG. 20B, the contents of the portal site selected by the user is displayed. By settling it as the final decision (step S128 of FIG. 11), the portal site containing the menu of each contents site, that is, the portal site being selected so far, can be determined (step S26 of FIG. 8). At this time, as shown in FIG. 21A, a screen for inquiring the type of the terminal of the portable telephone used by the user is displayed before making the final decision, and the user inputs the terminal information in response. Upon this, the confirmation screen (FIG. 20B) to which the information is reflected is displayed.

Subsequently, in the user operation device 2, the information for selecting the above-described determined portal site, i.e. the portal information, is registered to the data managing server 3 (step S3 of FIG. 7). The menu information of the portal site determined by the user, the portal information containing the contents information to be added thereto, and also the terminal information are transmitted to the data managing server 3 from the user operation device 2 along with the user ID which is the identification data of the user (step S129 of FIG. 11), and the information along with the ID is registered to the respective user portal information storage unit 32f in the data managing server 3 (step S130 of FIG. 11).

The data managing server 3 sets the URL to the portal site and transmits the URL to the address data of the portable terminal owned by the user who is being user-authenticated (step S131 of FIG. 11). Specifically, the user ID as the identification data peculiar to each user is encoded and added to the end of the pre-determined URL to be transmitted. Upon receiving it, the portable telephone 1 stores the received URL to the SIM card built in the portable telephone (steps S132, S133 of FIG. 11). At this time, the screen as shown in FIG. 21B is displayed on the display of the user operation device 2 while the data managing server 3 is transmitting the data. Thereby, the user ID peculiar to the user is added to the end of the URL written to the SIM card, so that it becomes the URL peculiar to each user. The URL is for accessing to the data managing server 3.

Thereby, it becomes possible for the user to easily set the portal site containing the website desired by the user oneself while viewing the screen displayed in the user operation device 2 and to obtain the URL which is accessible to the sites for the own portable terminal. Accordingly, it enables to obtain the data easily and promptly without operating the small operation unit of the portable terminal and removing the SIM card. Further, it enables to enhance the security at the time of user authentication.

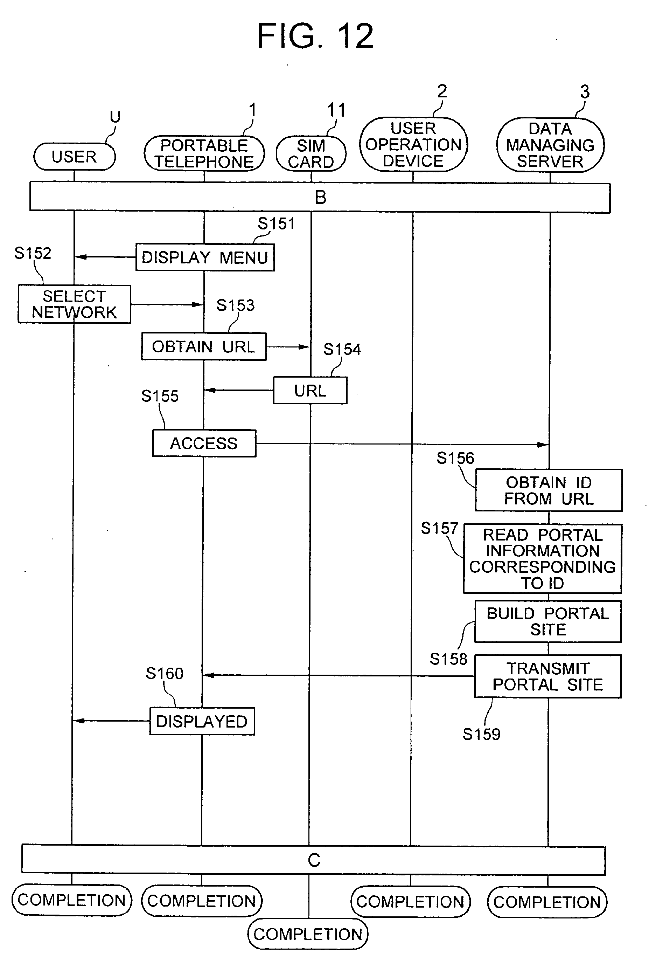

Next, by referring to FIG. 12, FIG. 13, FIG. 9, and FIG. 10, described are the operation of the entire system and the operation of the data managing server 3 at the time of making an access to the URL after the URL of the user' s personal portal site is recorded in the memory medium of the portable telephone 1 as described above.

Before that, the operation of the data managing server 3 with respect to the above-described user operation device 2 before being accessed by the user will be described briefly. First, the data managing server 3 always receives the contents which can be added to the portal site. That is, it receives a portal site adding request by receiving an access from another contents server 4, which is, specifically, from the administrator of the contents server 4. When a specific condition is satisfied, it is registered as the contents site which can be additionally inserted to the portal site, and the URL of the contents site, the text data of the details of the contents, sample screen data and the like are stored in the contents data storage unit 32d (contents managing processing, step S31 of FIG. 9). The data is managed in the contents managing unit (not shown) within the data managing server 3, and is transmitted to the user operation device 2 along with the screen data to be displayed in the device 2 and a program for controlling the display of the data (step S32 of FIG. 9). Further, as described above, performed is the portal information registration/update processing (step S33 of FIG. 9) for receiving and registering the portal information showing the contents of the portal site selected and set by each user, which is transmitted from the user operation device 2. At this time, if the user is registering for the first time, the URL is to be transmitted to the address of the portable terminal 1 of the user as in the step S131 of FIG. 11 as described above.

Thereafter, when there is an access from the user through the portable telephone 1, the processing for distributing the portal site peculiar to the user is performed (step S34 of FIG. 9). This operation will be described in detail. First, when the user selects the Internet connection (step S152 of FIG. 12) from the top menu showing the functions of the portable telephone 1 (step S151 of FIG. 12), the terminal of the portable telephone 1 reads out the URL recorded by the portal site data providing device 2 as described above from the SIM card (steps S153, S154 of FIG. 12) as described above. Using the URL, an access is made to the data managing server 3 as the connection target (step S155 of FIG. 12). There may be portable terminals which do not read out the URL stored in the SIM card at the time of making an access to the Internet, depending on the types. In such a case, the data managing server 3 distributes the URL transmitted by a short mail service (SMS) or an E-mail after programming it to be recorded in a local region based on the information on the type of the portable terminal inputted by the user. Thereby, the portable telephone 1 reads out the URL stored in the local region for making an access to the portal site.

Then, when there is an access from the portable telephone 1 (YES in step S41 of FIG. 10), the data managing server 3 extracts the user ID included in the end of the received URL (step S42 of FIG. 10, step S156 of FIG. 12) . It then reads out the portal information of the ID or information related to the ID by referring to the user ID (step S43 of FIG. 10, step S157 of FIG. 12). Thereby, the portal information of the user who is making an access can be read out. The portal site is built (step S44 of FIG. 10, step S158 of FIG. 12) according to the read-out portal information and the portal site building data. At this time, for example, if it is the portal site in which no change is applied to the course prepared in advance, this site is used since it is prepared in advance as the portal site building data. When there are additional contents, the portal site which is appropriate for each user is built by adding the link which is the address data of the contents site stored in the contents data storage unit to the portal site of each course as the base. Then, the data of built portal site is distributed to be displayed on the display unit of the portable telephone 1 (step S45 of FIG. 10, step S159 of FIG. 12). At this time, the above-described portal information contains the information regarding the type of the portable telephone 1. Thus, at the time of building, it is built by adjusting the screen size and the like so that the screen display becomes appropriate for each type. Therefore, in the portable telephone 1, the portal site can be appropriately displayed and the user can view the site (step S160 of FIG. 12).

Next, described is the processing operation at the time of making an access to each contents site from the displayed portal site (step S35 of FIG. 9). First, the user selects a menu item from the portal site and if it is a subcategory (YES in step S46 of FIG. 10), a page (site) of the subcategory for displaying the contents site included in the subcategory is built by referring to the portal information (step S47 of FIG. 10). Then, the page is distributed (step S48 of FIG. 10).

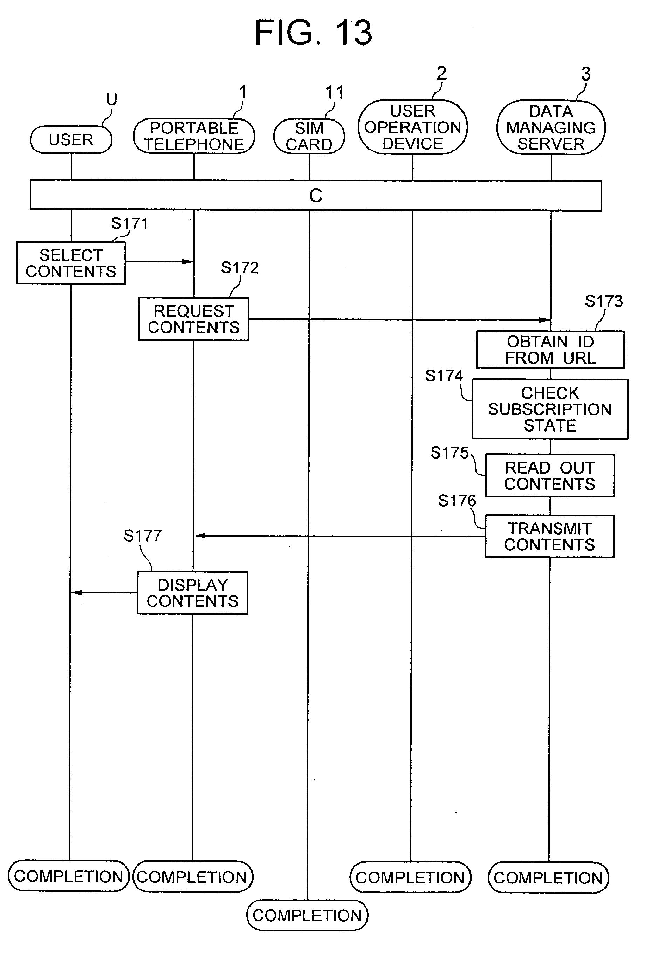

After that, when the main page of the portal site or the link of the contents site displayed in the subpage is selected (YES in step S49 of FIG. 10, step S171 of FIG. 13), the data for requesting the contents is transmitted to the data managing server 3 from the potable telephone 1 (step S172 of FIG. 13) . Upon receiving it, the data managing server 3 reads out the user ID from the URL. If it has already been read out, the user ID on the buffer memory is obtained (step S173 of FIG. 13). Then, the user ID and the data within the contents data storage unit 32d are referred for checking whether or not the user has already subscribed for using the selected contents (step S50 of FIG. 10, step S174 of FIG. 13) . When it is judged that the user has subscribed (YES in step S51 of FIG. 10), an access is made to the contents server according to the URL of the contents for obtaining the required contents (step S52 of FIG. 10, step S175 of FIG. 13). By distributing the contents to the portable telephone 1 (step S53 of FIG. 10, step S176 of FIG. 13), the user can read the contents through the display unit of the portable telephone 1 (step S177 of FIG. 13).

In the above, after receiving the contents once in the data managing server 3 from the contents server, the contents are distributed to the portable telephone 1. Thereby, the data managing server 3 functions as a proxy server so that it is possible to transmit/receive data promptly. At the same time, when it is a pay site with a charge, as described above, the fee can be charged through the user operation device 2 at the time of selecting the portal site. Therefore, it becomes unnecessary to subscribe and charge a fee by each contents site.

With this, the user can input the contents of the one's desired portal site through the user operation device 2, and the URL of the portal site to which the contents are reflected is transmitted to the portable terminal and automatically stored in the recording medium such as the SIM card. Thus, only the URL accessible to the target portal site is stored in the memory of the portable terminal and a personally customized portal site can be easily formed. The security is tight when authenticating the user at the time of log-in processing so that it enables to prevent such inconveniences that the contents of the portal site is altered unlawfully by a third party or a subscription to a pay site is made without a permission of the user.

### (Modification Example)

The data obtained by operating the user operation device 2 is not limited to the above-described URL to the own portal site. For example, in the case where the communication fee of the portable terminal is managed within the portable telephone, it may be the deposit amount information of the communication fee. That is, the user operation device 2 has a function (a deposit amount information receiving function) of receiving the information on the deposit amount to be charged, which is inputted to the portable telephone 1 by the user, and the deposit amount information is managed by the data managing server 3 and transmitted to the portable telephone 1. Thereby, the deposit amount is added in the portable telephone 1 and the communication fee charged for each communication is subtracted from the total deposit amount.

Further, in such a case, the communication fee data may be managed by the data managing server 3. That is, by inputting the amount to be charged to the user operation device 2 after the above-described log-in processing, the limited available amount of the portable telephone 1 is increased to be managed by the data managing server 3. As described above, by utilizing the user authentication system under a high security also when inputting the important data regarding the deposit amount, the reliability for the user can be improved.

### THIRD EMBODIMENT

Next, another embodiment of the user authentication system of the present invention will be described. The user authentication system in this embodiment has almost the same configuration as that of the first embodiment as described above except for the following respects.

First, in this embodiment, when the user U inputs the user ID (identification data) to the user operation device 2, the user operation device 2 requests to the data managing server 3 to generate a password (a corresponding data) which corresponds to the user ID, and to return the password (the corresponding data generation requesting device). In response, the data managing server 3 generates and stores the password (corresponding data) and transmits it to the user operation device 2. At this time, the data managing server 3 requests to the user operation device 2 to display the password on the display (display requesting device). Thereby, the user operation device 2 receiving the password displays the password on the display 25 (display device). As described above, the system in which the user operation device 2 and the data managing server 3 are combined is provided with the display device which displays the password (corresponding data) generated by corresponding to the user ID (identification data) which is inputted in the beginning to be viewed by the user who has inputted the user ID.

Further, the data managing server 3 transmits the password input screen data to the address data which is stored by being related to the user ID (input screen transmitting device) almost simultaneously, or before/after returning the password to the user operation device 2 as described above. Thereby, the password input screen is to be displayed in the portable telephone 1 of the user who has inputted the user ID.

Then, the user recognizes the password displayed in the user operation device 2 and inputs the password to the input screen displayed in the portable telephone 1. Thereby, the password is transmitted to the data managing server 3 from the portable telephone 1. For example, an input section of the password and a transmission button are displayed on the input screen, and it is so set in advance that the password is transmitted to the data managing server 3 from the portable telephone 1 when the user selects the transmission button after inputting the password.

Then, as in the case of the first embodiment, the data managing server 3 after receiving the password from the portable telephone 1 collates to check whether or not the received password is stored. When it is consistent, it allows the user to log in. Thereby, the user U can receive prescribed services thereafter by operating the user operation device 2.

As in the case of the first embodiment, the first data to be inputted by the user U to the user operation device 2 may not be the user ID but may be the address data of the portable terminal such as an E-mail address. With this, the above-described password input screen data is also transmitted to the inputted address data. Thus, the user U can input the password displayed in the user operation device 2 to the own portable telephone 1 through the transmitted input screen.

In this manner as described above, as in the above-described case, log-in processing is permitted only when the user who is making an access to the user operation device 2 actually and presently carries the portable telephone owned by the user. Therefore, authentication of the user can be surely performed and the security can be enhanced.

Further, in such a case, the authentication processing may be performed to permit the log-in processing by the user only when it is determined that the location of the user operation device 2 is almost consistent with the present positional information of the portable telephone 1 by obtaining the information as described above.

### INDUSTRIAL APPLICABILITY

The user authentication system of the present invention can be used as the system for keeping the security when a user of a portable terminal obtains a prescribed data on a network for the portable terminal, so that it has an industrial applicability.

## Claims

1. A user authentication system, comprising:
an address data storing device for storing an address data of a portable terminal owned by a user in advance by relating it to an identification data peculiar to the user for identifying the user;
an input device for receiving an input of the identification data from the user;
a corresponding data generating device for generating and storing a corresponding data which corresponds to the inputted identification data;
a corresponding data transmitting device for transmitting the corresponding data generated in the corresponding data generating device to the address data which is related to the identification data by extracting the address data from the address data storing device; and also
a collation device for collating to check, when the corresponding data is inputted by the user through the input device, whether or not the corresponding data is consistent with the corresponding data which has been generated and stored by the corresponding data generating device.

2. A user authentication system, comprising:
an input device for receiving from a user an input of an address data of a portable terminal owned by the user;
a corresponding data generating device for generating and storing a corresponding data which corresponds to the inputted address data;
a corresponding data transmitting device for transmitting the corresponding data generated in the corresponding data generating device to the address data received in the input device; and also
a collation device for collating to check, when the corresponding data is inputted by the user through the input device, whether or not the corresponding data is consistent with the corresponding data which has been generated and stored by the corresponding data generating device.

3. A user authentication system, comprising:
an address data storing device for storing an address data of a portable terminal owned by a user in advance by relating it to an identification data peculiar to the user for identifying the user;
an input device for receiving an input of the identification data from the user;
a corresponding data generating device for generating and storing a corresponding data which corresponds to the inputted identification data;
a display device for displaying the generated corresponding data so as to be viewed by the user who has inputted the identification data to the input device;
an input screen transmitting device for transmitting an input screen data which is to be displayed in the portable terminal of the user for requesting an input of the corresponding data to the address data by extracting the address data being related to the identification data from the address data storing device; and also
a collation device for collating to check whether or not the corresponding data is consistent with the corresponding data which has been generated and stored by the corresponding data generating device by receiving the corresponding data from the portable terminal, which is inputted to the input screen displayed in the portable terminal.

4. A user authentication system, comprising:
an input device for receiving from a user an input of an address data of a portable terminal owned by the user;
a corresponding data generating device for generating and storing a corresponding data which corresponds to the inputted address data;
a display device for displaying the generated corresponding data so as to be viewed by the user who has inputted the address data to the input device;
an input screen transmitting device for transmitting an input screen data which is to be displayed in the portable terminal of the user for requesting an input of the corresponding data to the address data which is received in the input device; and also
a collation device for collating to check whether or not the corresponding data is consistent with the corresponding data which has been generated and stored by the corresponding data generating device by receiving the corresponding data from the portable terminal, which is inputted to the input screen displayed in the portable terminal.

5. A data providing system, using the user authentication system according to claims 1, 2, 3 or 4 for performing user authentication and for providing a data used in a portable terminal to the portable terminal of the user after being authenticated, the data providing system comprising:
a data request receiving device for receiving a data request inputted through the input device from a user who is authenticated as a result of the collation performed by the collation device; and
a requested data transmitting device for transmitting a prescribed data which corresponds to the received request to an address data of the user.

6. The data providing system according to claim 5, wherein:
the data request receiving device comprises a portal specifying information receiving function for receiving portal specifying information from a user, which specifies contents of a portal site to be accessed by the portable terminal of the user; and
the requested data transmitting device comprises a function of transmitting a site address data to the portable terminal, which is accessible to a portal site being specified based on the portal specifying information.

7. The data providing system according to claim 5, wherein:
the data request receiving device comprises a deposit amount information receiving function for receiving deposit amount information from the user for specifying a deposit amount for a communication fee to be used in the portable terminal of the user; and
the requested data transmitting device comprises a function of transmitting a communication fee data in an amount according to the deposit amount information to the portable terminal.

8. A user authentication input apparatus, comprising:
an identification data input receiving device for receiving from a user an input of an identification data which is peculiar to the user;
a corresponding data transmission requesting device for transmitting the inputted identification data to an authentication server connected through a network and also for requesting to the authentication server to generate a corresponding data which corresponds to the identification data and transmitting it to an address data of the portable terminal owned by the user who has inputted the identification data;
a corresponding data input receiving device for receiving from the user an input of the corresponding data transmitted to the portable terminal of the user from the authentication server; and
a collation requesting device for requesting to the authentication server to collate to check whether or not the inputted corresponding data is consistent with the data which has been generated in the authentication server.

9. A user authentication input apparatus, comprising:
an address data input receiving device for receiving from a user an input of an address data of a portable terminal owned by the user;
a corresponding data transmission requesting device for transmitting the inputted address data to an authentication server connected through a network and also for requesting to the authentication server to generate a corresponding data which corresponds to the address data and transmitting it to the address data;
a corresponding data input receiving device for receiving from the user an input of the corresponding data transmitted to the portable terminal of the user from the authentication server; and
a collation requesting device for requesting to the authentication server to collate to check whether or not the inputted corresponding data is consistent with the data which has been generated in the authentication server.

10. A user authentication input apparatus, comprising:
an identification data input receiving device for receiving from a user an input of an identification data which is peculiar to the user;
a corresponding data generation requesting device for transmitting the inputted identification data to an authentication server connected through a network and for requesting to the authentication server to generate and return a corresponding data which corresponds to the identification data, while requesting to transmit an input screen data which is to be displayed in the portable terminal of the user for requesting to the user an input of the corresponding data to an address data of the portable terminal owned by the user who has inputted the identification data; and
a display device for displaying the corresponding data returned from the authentication server so as to be viewed by the user who has inputted the identification data to the identification data input receiving device, wherein
the corresponding data displayed in the display device is a data which is inputted to the input screen displayed in the portable terminal of the user and transmitted to the authentication server for being collated to check whether or not it is consistent with the data which has been generated by the authentication server.

11. A user authentication input apparatus, comprising:
an address data input receiving device for receiving from a user an input of an address data of a portable terminal owned by the user;
a corresponding data generation requesting device for transmitting the inputted address data to an authentication server connected through a network and for requesting to the authentication server to generate and return a corresponding data which corresponds to the address data, while requesting to transmit an input screen data which is to be displayed in the portable terminal of the user for requesting to the user an input of the corresponding data to the address data; and
a display device for displaying the corresponding data returned from the authentication server so as to be viewed by the user who has inputted the address data to the address data input receiving device, wherein
the corresponding data displayed in the display device is a data which is inputted to the input screen displayed in the portable terminal of the user and transmitted to the authentication server for being collated to check whether or not it is consistent with the data which has been generated by the authentication server.

12. A user authentication server, comprising:
an address data storing device for storing an address data of a portable terminal owned by a user in advance by relating it to an identification data peculiar to the user for identifying the user;
a corresponding data generating device for receiving the identification data inputted by the user from an input device connected through a network and also for generating and storing a corresponding data which corresponds to the received identification data;
a corresponding data transmitting device for transmitting the corresponding data generated in the corresponding data generating device to the address data which is related to the received identification data by extracting the address data from the address data storing device; and also
a collation device for collating to check whether or not the corresponding data is consistent with the corresponding data which has been generated and stored by the corresponding data generating device by receiving the corresponding data inputted by the user from the input device.

13. A user authentication server, comprising:
a corresponding data generating device for receiving an address data of a portable terminal owned by a user, which is inputted by the user from an input device connected through a network and also for generating and storing a corresponding data which corresponds to the received address data;
a corresponding data transmitting device for transmitting the corresponding data to the received address data; and also
a collation device for collating to check whether or not the corresponding data is consistent with the corresponding data which has been generated and stored by the corresponding data generating device by receiving the corresponding data inputted by the user from the input device.

14. A user authentication server, comprising:
an address data storing device for storing an address data of a portable terminal owned by a user in advance by relating it to an identification data peculiar to the user for identifying the user;
a corresponding data generating device for receiving the identification data inputted by the user from an input device connected through a network and also for generating and storing a corresponding data which corresponds to the received identification data;
a display requesting device for requesting to the input device to display the generated corresponding data so as to be viewed by the user who has input the identification data to the input device;
an input screen transmitting device for transmitting an input screen data which is to be displayed in the portable terminal of the user for requesting an input of the corresponding data to the address data by extracting the address data which is related to the received identification data from the address data storing device; and also
a collation device for collating to check whether or not the received corresponding data is consistent with the corresponding data which has been generated and stored by the corresponding data generating device by receiving the corresponding data from the portable terminal, which is inputted to the input screen displayed in the portable terminal.

15. A user authentication server, comprising:
a corresponding data generating device for receiving an address data of a portable terminal owned by a user, which is inputted by the user from an input device connected through a network and also for generating and storing a corresponding data which corresponds to the received address data;
a display requesting device for requesting to the input device to display the generated corresponding data so as to be viewed by the user who has input the address data to the input device;
an input screen transmitting device for transmitting an input screen data which is to be displayed in the portable terminal of the user for requesting an input of the corresponding data to the received address data; and also
a collation device for collating to check whether or not the received corresponding data is consistent with the corresponding data which has been generated and stored by the corresponding data generating device by receiving the corresponding data from the portable terminal, which is inputted to the input screen displayed in the portable terminal.

16. A portable terminal having a prescribed address data for enabling to receive data, comprising:
a function of, by a user authentication system placed at a prescribed area, receiving an input of identification data peculiar to a user from an owner of the portable terminal, generating a corresponding data corresponded to the identification data, and receiving the corresponding data when the corresponding data is transmitted to the address data of the portable terminal; and
a function of displaying the received corresponding data in a display, wherein
the corresponding data is a data which is inputted to the user authentication system by the user to be collated to check whether or not it is consistent with the data which has been generated by the user authentication system.

17. A portable terminal having a prescribed address data for enabling to receive data, comprising:
a function of, by a user authentication system placed at a prescribed area, receiving an input of an address data of a portable terminal from a user who is an owner of the portable terminal, generating a corresponding data corresponded to the address data, and receiving the corresponding data when the corresponding data is transmitted to the address data of the portable terminal; and
a function of displaying the received corresponding data in a display, wherein
the corresponding data is a data which is inputted to the user authentication system by the user to be collated to check whether or not it is consistent with the data which has been generated by the user authentication system.

18. A user authentication method, comprising:
an input receiving step for receiving from a user an input of an identification data peculiar to the user through an input device;
a corresponding data generating step for generating and storing a corresponding data which corresponds to the inputted identification data;
a corresponding data transmitting step for transmitting the corresponding data generated in the corresponding data generating step to an address data of the portable terminal owned by the user of the identification data by extracting the address data from an address data storing device in which the identification data and the address data are stored in advance by being related to each other; and also
a collation step for collating to check, when the corresponding data is inputted by the user through the input device, whether or not the corresponding data is consistent with the corresponding data which has been generated and stored in the corresponding data generating step.

19. A user authentication method, comprising:
an input receiving step for receiving from a user an input of an address data of a portable terminal owned by the user through an input device;
a corresponding data generating step for generating and storing a corresponding data which corresponds to the inputted address data;
a corresponding data transmitting step for transmitting the corresponding data generated in the corresponding data generating step to the received address data; and also
a collation step for collating to check, when the corresponding data is inputted by the user through the input device, whether or not the corresponding data is consistent with the corresponding data which has been generated and stored in the corresponding data generating step.

20. A user authentication program for achieving, in a computer for authenticating a user when the user logs in:
an address data storing device for storing an address data of a portable terminal owned by a user in advance by relating it to an identification data peculiar to the user for identifying the user;
an input device for receiving an input of the identification data from the user;
a corresponding data generating device for generating and storing a corresponding data which corresponds to the inputted identification data;
a corresponding data transmitting device for transmitting the corresponding data generated in the corresponding data generating device to the address data which is related to the identification data by extracting the address data from the address data storing device; and
a collation device for collating to check, when the corresponding data is inputted by the user through the input device, whether or not the corresponding data is consistent with the corresponding data which has been generated and stored by the corresponding data generating device.

21. A user authentication program for achieving, in a computer for authenticating a user when the user logs in:
an input device for receiving from a user an input of an address data of a portable terminal owned by the user;
a corresponding data generating device for generating and storing a corresponding data which corresponds to the inputted address data;
a corresponding data transmitting device for transmitting the corresponding data generated in the corresponding data generating device to the address data received in the input device; and also
a collation device for collating to check, when the corresponding data is inputted by the user through the input device, whether or not the corresponding data is consistent with the corresponding data which has been generated and stored by the corresponding data generating device.
